# EUROPEAN PATENT SPECIFICATION

(11) **EP 1 631 412 B1**
(45) Date of publication and mention of the grant of the patent: **18.04.2012**
(21) Application number: 04732538.6
(22) Date of filing: 12.05.2004
(51) Int. Cl.: B23K 1/00

(54) **A NOVEL CONNECTING PIECE OF ELECTRICALLY CONDUCTING MATERIAL PREFERABLY A CABLE TERMINAL AND A METHOD OF PRODUCING THE SAME**
NEUES VERBINDUNGSSTÜCK AUS ELEKTRISCH LEITENDEM MATERIAL, VORZUGSWEISE EIN KABELANSCHLUSS, UND VERFAHREN ZUR HERSTELLUNG DESSELBEN
NOUVELLE PIECE DE CONNEXION D'UN MATERIAU ELECTRIQUEMENT CONDUCTEUR DE PREFERENCE UN TERMINAL DE CABLE ET PROCEDE DE FABRICATION CORRESPONDANT

(30) Priority: 12.05.2003 SE 0301391
(43) Date of publication of application: 08.03.2006
(73) Proprietor: Safetrack Infrasystems Sisab Ab, 245 93 Staffanstorp (SE)
(72) Inventor: PETTERSEN, Ola, S-222 23 Lund (SE)
(74) Representative: Persson, Albin
(86) International application number: PCT/SE2004/000726
(87) International publication number: WO 2004/098825

(56) References cited:
- GB-A- 1 486 516
- SE-B- 447 841
- US-A- 4 716 272
- US-A1- 2002 190 097

## Description

The present invention relates to a completely new method of producing a completely new type of connecting piece of metal or other electrically conductive material, preferably a cable shoe, which is to be joined with another object of metal or other electrically conductive material by brazing where heat is added by way of an electric arc, without the development of structural changes (formation of martensite) under the braze joint. The invention also includes this connecting piece, preferably a cable shoe, holder or connection device of metal or other electrically conductive material.

Until today, martensite formation has been minimised through a method of pin brazing described in Swedish patent 9003708-6 (469 319), as well as eliminated in a brazing process with a connecting piece described in Swedish patent 0101689-8 (518 383).

US-A-2002/90097 discloses a method and arrangement for a martensite-free brazing process in which the electrical developed power is calculated and regulated.

The disadvantage of existing systems has been the brazed attachment of thick connections with large-diameter cable or thread. The great mass of these thick connections requires more heat to melt the filler metal while heat disappears out into stock and large-diameter cable. It has then been necessary to increase the energy supplied to the brazing process, which has led to a greater risk of excessive temperature in the workpiece, particularly railway rails. An increased energy feed has led to the situation where the material that has caused the heat losses in the heating process has had its own temperature raised, which has entailed increased heat conductivity as a characteristic of this material, thus causing a greater heat-loss effect. The time spent on brazing with thick connections becomes too long.

Furthermore, there have been problems in the martensite-free brazing process when the carbon powder released from the carbon electrode and settling on, for example, the cable shoe, comes loose from the surface and interferes with the electric arc, extinguishing it by way of a short circuit preventing the brazing of the connecting piece from being completed.

A further disadvantage has been that the brazing clip located on the connecting piece has been inclined to come loose because of its protruding parts. Transports and handling by the operator during operation have caused problems.

Another annoying detail has been the flux between the connecting piece and the brazing clip, which is an undesired element from a production point of view.

Another technical detail relating to production has been that previous connecting pieces, cable shoes, have been comprised of pipes in which a cable or thread has been inserted and which have then been pressed together. The interior diameter of the pipe must be adapted to the cross-section area of the cable, consisting of cable material and air space between included cable threads. The relatively great amount of additional material from the pipe together with material flux during the pressing process have resulted in the connecting piece becoming too large and bulky, and having an undesired shape. This has been a problem when large-diameter connections have been needed on the cable.

Furthermore, failed brazings have presented a problem for different reasons, which have caused much extra work in removing the connection for the bad brazing and re-grinding the workpiece.

In addition, the flat surface of the connection members has not been a good heat receptor for a part of the heat produced by the electric arc, thus requiring an increase in the energy feed, which has resulted in an undesired outcome with fewer brazings before recharge of the battery.

The present invention relates to an improvement and a new type of an electrically conductive connecting piece of metal or other electrically conductive material, preferably a cable shoe, which is included in a completely new method for temperature-controlled brazing without the development of martensite. The invention also relates to a new method for manufacturing this new type of connecting piece of metal or other electrically conductive material, preferably a cable shoe.

An object of the invention is to be able to use a thick, heavy-duty cable shoe with large-diameter cable or thread and the inclusion of this cable shoe in a temperature-controlled brazing process. The desired result is to obtain a brazing which, under the braze joint, is completely free from martensite. Another object of the invention is to increase the bond strength of the carbon layer on the connecting piece of electrically conductive material, for example, a cable shoe, and to prevent this layer from coming loose in order to obtain a good brazing, without the risk of the electric arc in the brazing process being shut down or short-circuited.

A further object is to simplify manufacturing of connecting pieces of electrically conductive material so that all sizes of cables and, for example, cable shoes will be easily manufactured while also maintaining strength and quality. Another object has been, in the brazing process thus improved, to be able to reduce the included parts and avoid some steps that are now superfluous thanks to the new brazing process.

A further object has been, by changing the appearance of the connecting piece, for example, a cable shoe by way of knurling and/or blasting and by providing the cable shoe with one or several cavities, to enable a more secure brazing, and by regulating and controlling current and power, to be able to reduce energy, time and material consumption, and to reduce the number of failed brazings.

Furthermore, it is an object to be able to better secure the brazing clip on a connecting piece, for example, a cable shoe, so that it cannot easily be removed from the cable shoe when handled by the operator and during transportation, and to obtain an evenly thick braze joint between the cable shoe and the workpiece when brazing according to the new brazing process.

The characteristics of the present invention will become obvious from the appended claims.

Definitions of terminology, and some examples of connecting pieces:

| | | | | |
|---|---|---|---|---|
| End portion | Brazing block | | Wearout knob | |
| Middle portion | Filler | Joint part | | |
| Front portion | | | | |
| | | Joint part | | |
| | | Ring | | |
| | | Cable | Cable shoe | |
| | | Welding material | | |
| | | | | Different |
| | | Joint part | Cable shoe | connecting |
| | | Ring | | pieces |
| | | Joint part | Holder | |
| | | Wings | | |
| | | Joint part | | |
| | | Threaded pin | Connection device | |
| | | Joint part | | |
| | | Hook | Clothes hanger | |

The subdivision of the joint part in the first example applies also to the following examples.

### Table 1

The present invention will now be described more closely with reference to the appended drawings, which show a preferred embodiment of the invention.
Figure 1 shows a schematic overview of some of the components included in the brazing process.
Figure 2 shows the components included in an electrically conductive connecting piece, excluding the brazing clip.
Figure 3 shows the components included in an electrically conductive connecting piece, excluding the brazing clip, where some are mounted.
Figure 4 shows the components included in an electrically conductive connecting piece, mounted and excluding the brazing clip.
Figure 5 shows the components included in an electrically conductive connecting piece, mounted, excluding the brazing clip, and where compression has been performed.
Figure 6 shows the mounted components included in an electrically conductive connecting piece, on whose compressed portion welding or brazing has been performed, excluding the brazing clip.
Figure 7 shows a separately manufactured brazing clip.
Figure 8 shows an electrically conductive connecting piece in the form of a cable shoe with an unmounted brazing clip.
Figure 9 shows an electrically conductive connecting piece in the form of a cable shoe with a brazing clip slipped onto the front portion of the brazing block.
Figure 10 shows the base material for a brazing clip to be made on a brazing block.
Figure 11 shows an electrically conductive connecting piece in the form of a cable shoe with a separate base material for manufacturing a brazing clip on the brazing block of the cable shoe.
Figure 12 shows an electrically conductive connecting piece in the form of a cable shoe with a separate base material under the front portion of the brazing block of the cable shoe.
Figure 13 shows an electrically conductive connecting piece in the form of a cable shoe with a separate base material with folded-up side portions.
Figure 14 shows an electrically conductive connecting piece in the form of a cable shoe with a separate base material with folded-up edges and clamping tabs against the front portion of the brazing block of the cable shoe.
Figure 15 shows an electrically conductive connecting piece in the form of a cable shoe with a separate base material with folded-up edges and clamping tabs pressed into the front portion of the brazing block of the cable shoe.
Figure 16 shows an electrically conductive connecting piece in the form of a cable shoe with a brazing clip with portions located on the surface of the cable shoe and clamping tabs pressed into the front portion of the brazing block of the cable shoe.
Figure 17 shows the bottom of an electrically conductive connecting piece in the form of a cable shoe with a pressed-on brazing clip.
Figure 18 shows the appearance of the completely compressed brazing clip.
Figure 19 is a tilted bottom view of an electrically conductive connecting piece in the form of a cable shoe with a brazing clip and an electrode of a brazing gun.
Figure 20 is an elevational view of an electrically conductive connecting piece in the form of a cable shoe with a brazing clip and an electrode of a brazing gun.
Figure 21 shows an electrically conductive connecting piece in the form of a cable shoe with a brazing clip and a semicircular raised edge adapted to a guard ring provided in the brazing gun.
Figure 22 shows an electrically conductive connecting piece in the form of a cable shoe with a carbon electrode directly against the front portion of the brazing block of the cable shoe.
Figure 23 is a side elevational view of an electrically conductive connecting piece in the form of a cable shoe with a brazing clip and an electrode from a brazing gun and a semicircular raised edge adapted for the guard ring.
Figure 24 is a side elevational view of an electrically conductive connecting piece in the form of a cable shoe with a brazing clip and an electrode together with a guard ring from a brazing gun placed against the semicircular raised edge.
Figure 25 is a top view of the previous drawing.
Figure 26 shows how the electrically conductive connecting piece in the form of a cable shoe is moved towards a workpiece by the brazing gun via a carbon electrode and a guard ring.
Figure 27 shows how the carbon electrode and the guard ring which are joined with the brazing gun work on an electrically conductive connecting piece and workpiece.
Figure 28 shows an electrically conductive connecting piece to be brazed onto a non-planar workpiece.
Figure 29 shows an electrically conductive connecting piece secured onto a non-planar workpiece.
Figure 30 is a view where the brazing gun does not form a 90-degree angle with the supporting surface.
Figure 31 is the same view but with an angular offset in the other direction.
Figure 32 is also the same view of an electrically conductive connecting piece in a brazing process where the brazing gun has a normal position of 90 degrees.
Figure 33 shows how the filler is melted off asymmetrically during the brazing process.
Figure 34 shows a completed brazing where the filler has melted completely.
Figure 35 A shows a knurled connecting piece without brazing clip.
Figure 35 B shows a knurled connecting piece and a carbon electrode.
Figure 36 shows the polarisation of the brazing process in question with a knurled or otherwise superficially modified front portion of the brazing block.
Figure 37 shows a cable shoe with a cavity on the top surface of the front portion of the brazing block.
Figure 38 shows variants of the cavities with respect to shape, number and position on the top surface of the front portion of the brazing block.
Figure 39 shows a schematic cross-section of an electric arc between a carbon electrode and the top surface of the front portion of the brazing block and the carbon deposit.
Figure 40 shows a representation of a cable shoe from above with a carbon layer positioned on the top surface of the front portion of the brazing block.
Figure 41 shows a cross-sectional view of the effect of the cavity on thickness and geometric shape of the deposited carbon layer.
Figure 42 shows a connecting piece with a connection pipe.
Figure 43 shows a connecting piece with threaded bolt portion.
Figure 44 shows a connecting piece consisting of several brazing blocks with a common end portion and a threaded bolt portion.
Figure 45 shows a connecting piece with a connection hole.
Figure 46 shows a connecting piece consisting of several brazing blocks with a common end portion and a connection hole.
Figure 47 shows a connecting piece with several brazing blocks with a common front portion, and with a connection hole and a threaded bolt portion.
Figure 48 shows a connecting piece with wings.
Figure 49 shows a connecting piece with tongues.
Figure 50 shows a connecting piece consisting of several brazing blocks with a common end portion and a connection pipe.
Figure 51 shows a connecting piece consisting of several brazing blocks with a common end portion provided with mounting holes.
Figure 52 is a graph 1 showing the current or power, i.e., the output in relation to the time during the brazing process for a formula.
Figure 53 is a graph 2 for a specific situation.

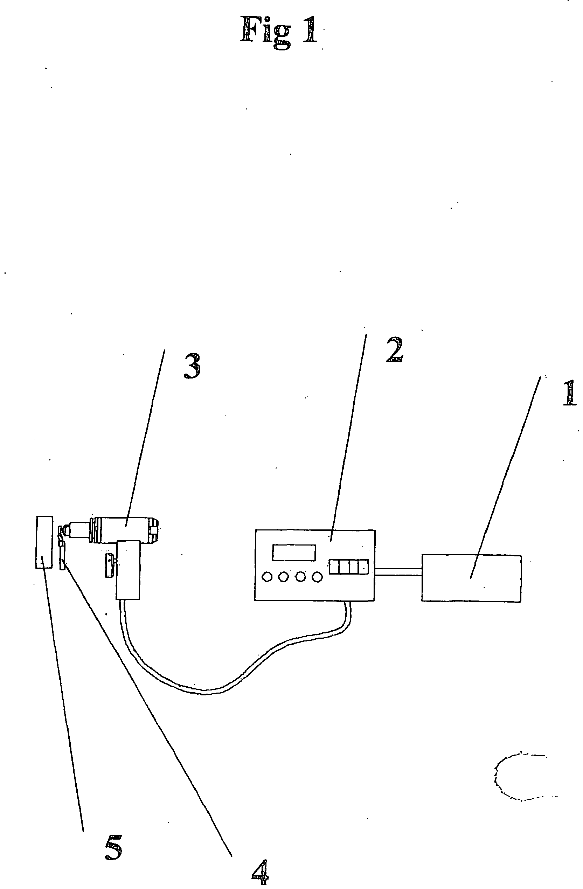

Figure 1 shows a schematic overview of some of the components included in the brazing process. It displays a battery 1, which comprises the energy source of the brazing process from which the current passes to an electronics unit 2. The electronics unit 2 receives and processes incoming information and data from the brazing gun 3 via its power-supply circuitry and signal cable 5 and incoming data from the battery 1 via a circuitry. In the electronics unit 2, there are a number of programmed formulas where every formula has unique characteristics for how the current or power, output, should be varied over time for a specific brazing situation. The operator selects a formula, with the aid of a formula selector, which suits this very specific brazing situation adapted to material and conditions required by the brazing situation. The electronics unit 2 also contains a detection and registration device, which provides information about what is happening during the brazing. This information is stored and processed in the electronics unit 2 and is forwarded to the operator after brazing is completed by way of a display and/or sound device. The information can also be stored for retrieval at a later time in electronic or other form via one of the data ports. This acts as an acknowledgement of the result of the brazing. The electronics unit 2 also contains communications ports for connection of external equipment, for example, printers, programming equipment, and data communications equipment. There is also a power and charging port for battery-powered equipment and charging equipment. There is also a formula selector and an alarm-acknowledgement function.

When the power switch on the brazing gun 3 closes an electric circuit, a carbon electrode mounted in the electrode holder will initially short-circuit the circuit against a connecting piece 4 of electrically conductive material, for example, a cable shoe, and afterwards, when the carbon electrode in the brazing gun 3 is lifted from the connecting piece 4, ignites an electric arc 34 which, protected by guard ring(s) will work on the surface of the connecting piece 4. The connecting piece 4 will be brazed onto the workpiece 5.

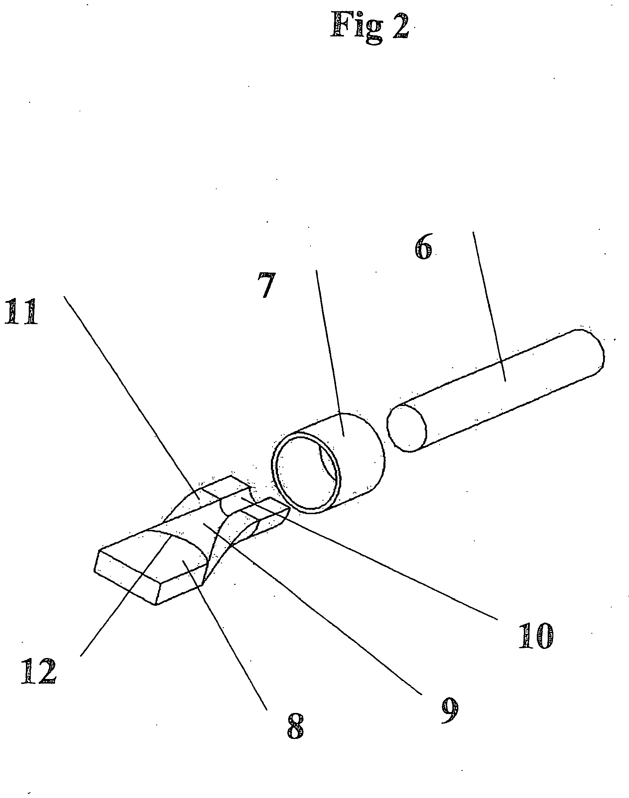

Figure 2 shows the components included in an electrically conductive connecting piece 4 excluding the brazing clip. The drawing shows a cable or thread 6 which will be inserted into a pipe 7 from behind, and from the other side a brazing block 11 is inserted, consisting of an end portion 10, a middle portion 9 and a front portion 8. Between the front portion 8 and the middle portion 9 is a semicircular raised edge 12. The drawing shows the main components for manufacturing a type of connecting piece 4 of electrically conductive material, preferably a cable shoe. The end portion 10 of the brazing block 11, its middle portion 9 and its front portion 8 are made from a rectangular original piece which has been compressed.

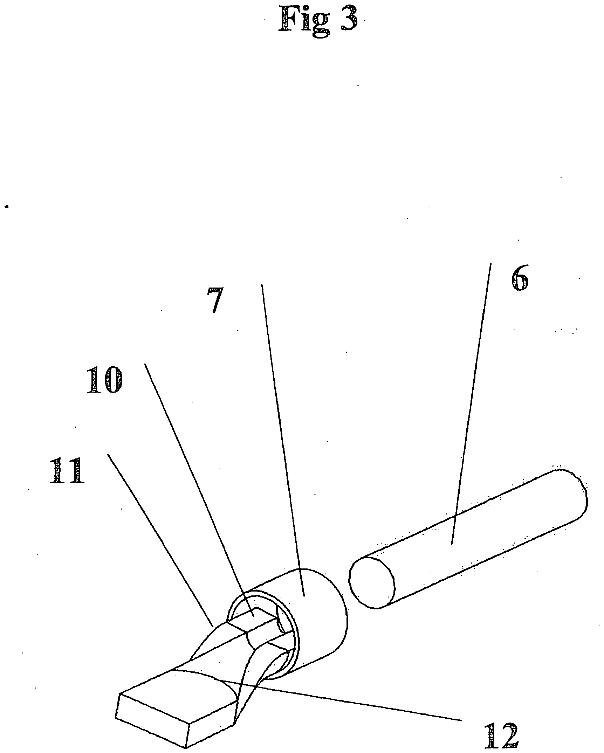

Figure 3 shows the components included in an electrically conductive connecting piece 4 excluding the brazing clip where some of the parts are mounted. It displays how the brazing block 11 with its end portion 10 is inserted into the pipe 7 and the cable 6 is on the other side. It also displays the semicircular raised edge 12.

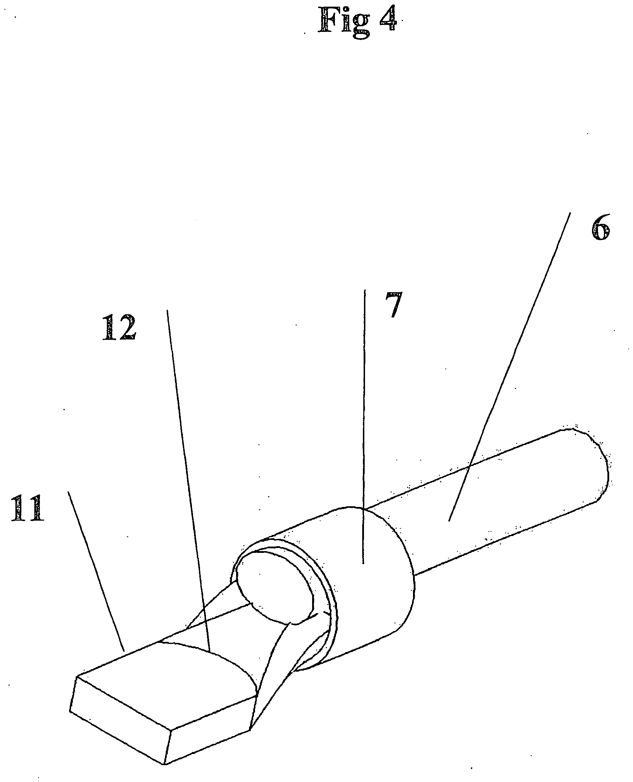

Figure 4 shows the mounted components included in an electrically conductive connecting piece 4 excluding the brazing clip. First, the end portion 10 of the brazing block 11 has been inserted into the pipe 7, and after that, the cable or thread 6 has been inserted into the same pipe 7, or vice versa. The drawing also shows the semicircular raised edge 12.

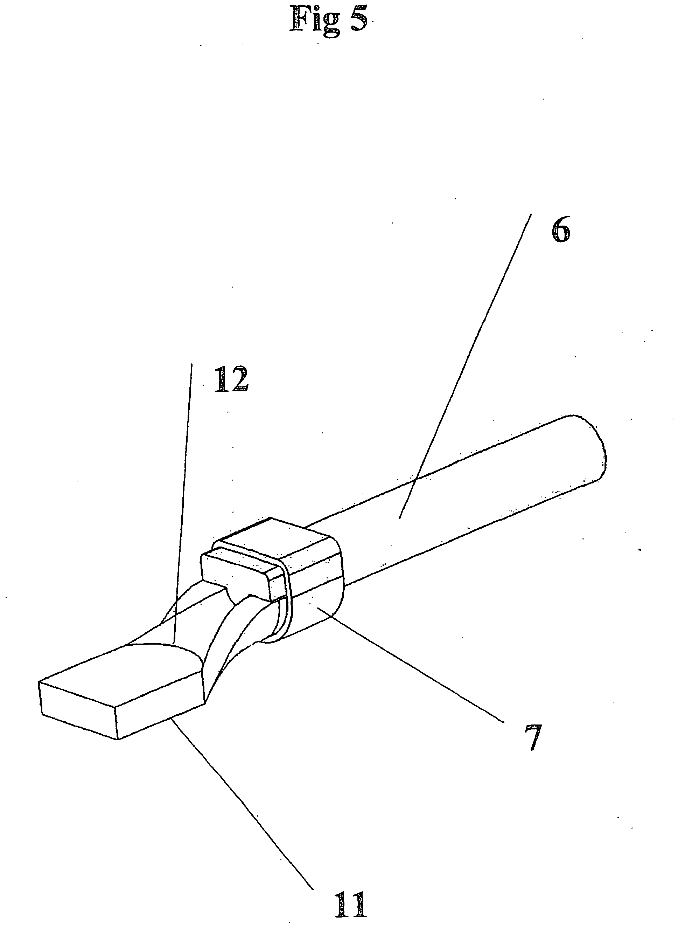

Figure 5 shows the mounted components included in an electrically conductive connecting piece 4 excluding the brazing clip, where a compression of the pipe 7 has been performed, so that it attaches the cable 6 to the bracing block 11. It displays how the cable 6, when the pipe 7 is being compressed, is pressed down into the end portion 10 of the brazing block 11 and partially into its middle portion 9.

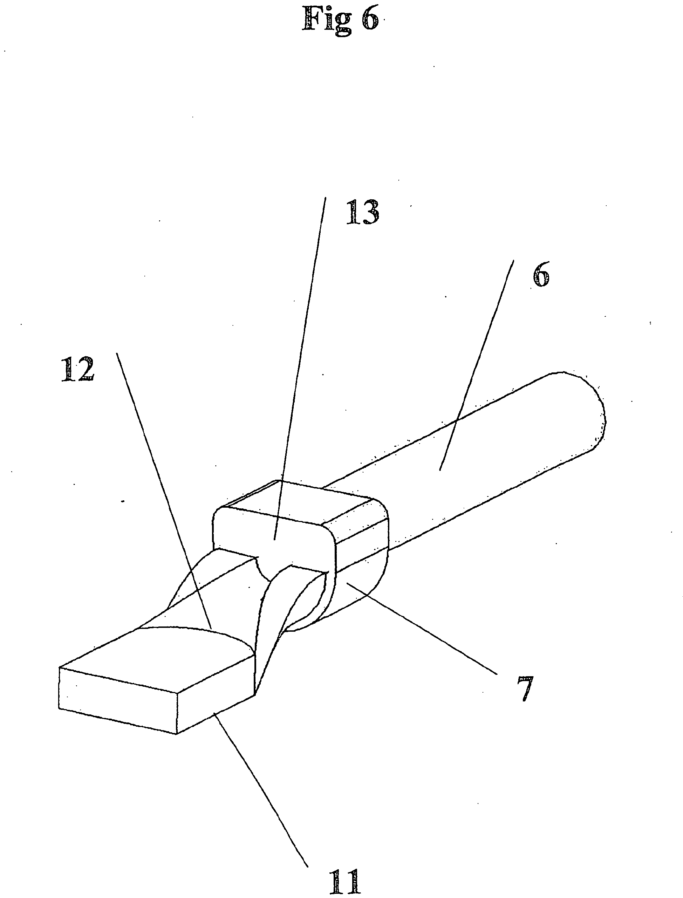

Figure 6 shows the mounted parts included in an electrically conductive connecting piece 4, excluding the brazing clip, where a welding 13 or brazing has been performed on the compressed portion outside the pipe 7. The drawing shows the cable 6, the front portion 8 of the brazing block 11 and the semicircular raised edge 12.

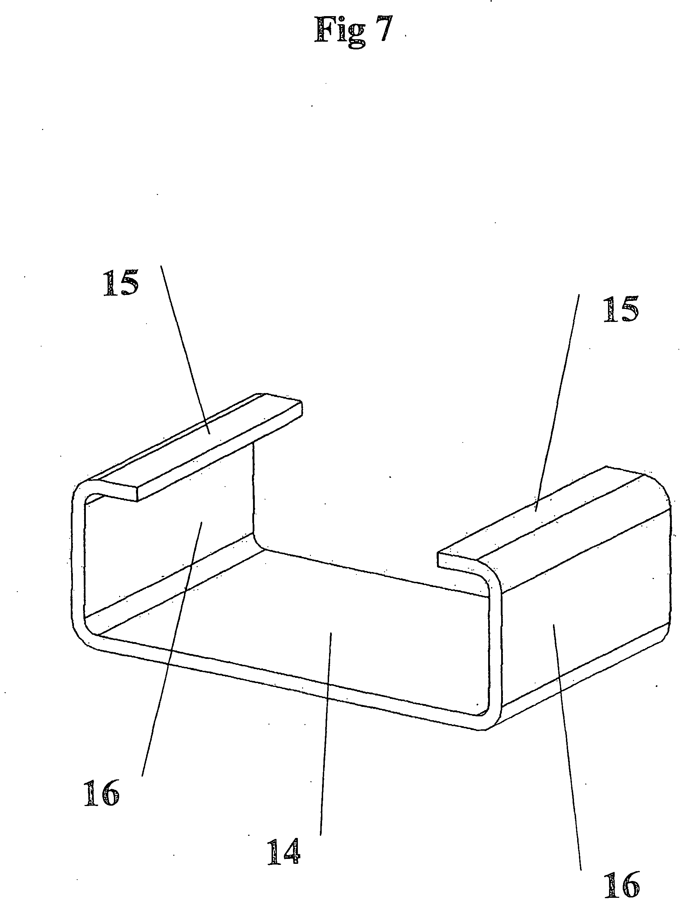

Figure 7 shows a separately manufactured brazing clip 14 with both side portions 16 and both clamping tabs 15. This brazing clip 14 is manufactured separately and is to be slipped onto the brazing block 11.

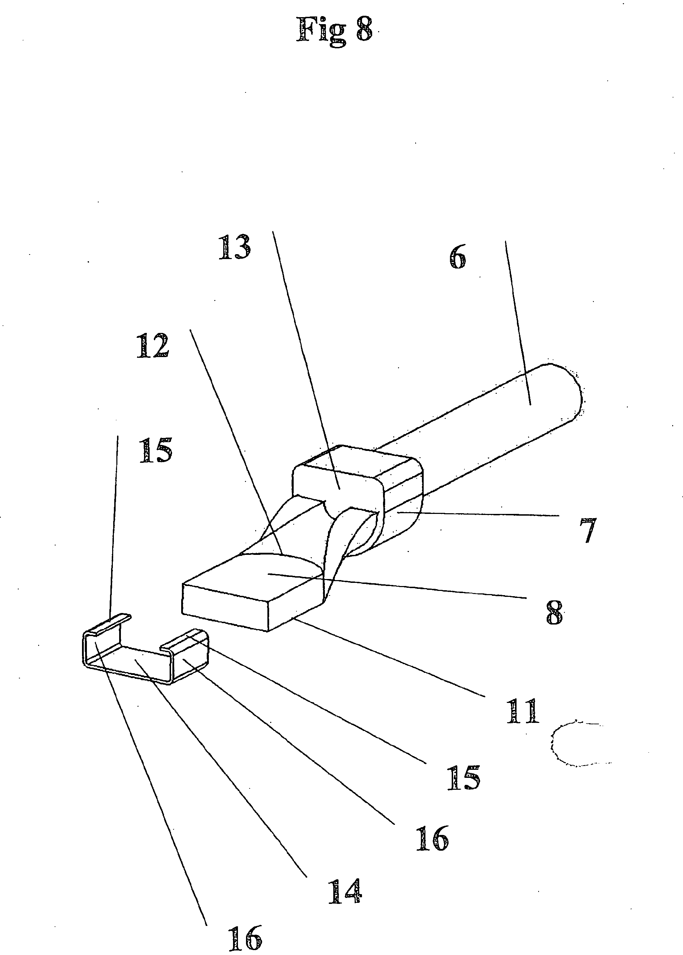

Figure 8 shows an electrically conductive connecting piece 4 in the form of a cable shoe with an unmounted brazing clip 14, showing the cable 6, the compressed pipe 7 with a weld or braze joint 13 and the semicircular raised edge 12. The brazing clip 14, with its side portions 16 and clamping tabs 15, is to be slipped onto the front portion 8 of the brazing block 11.

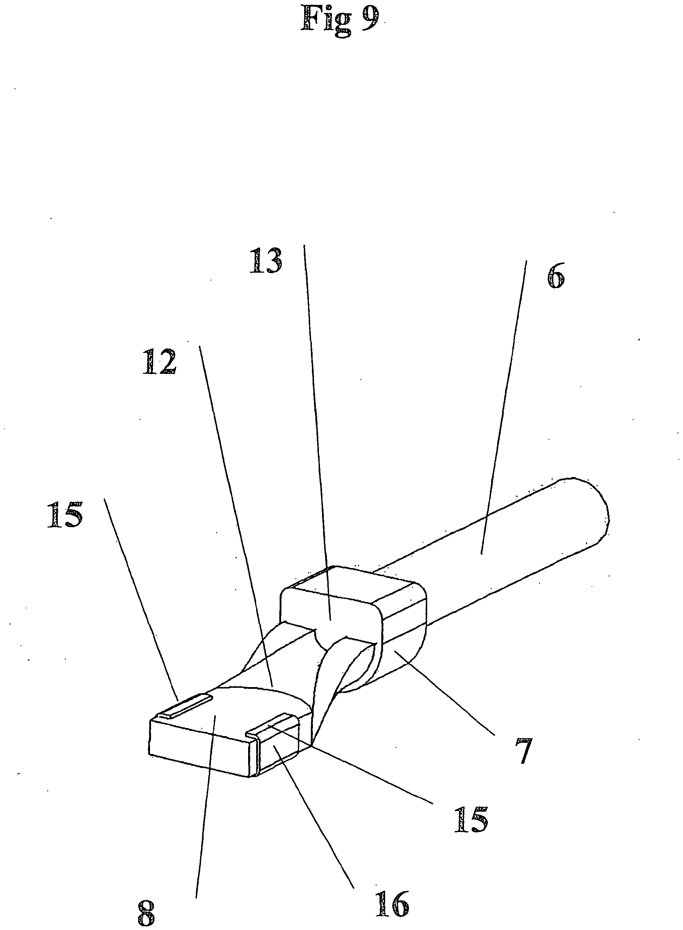

Figure 9 shows an electrically conductive connecting piece 4 in the form of a cable shoe with a brazing clip 14 slipped onto the homogeneous front portion 8. It shows the same details as the previous figure.

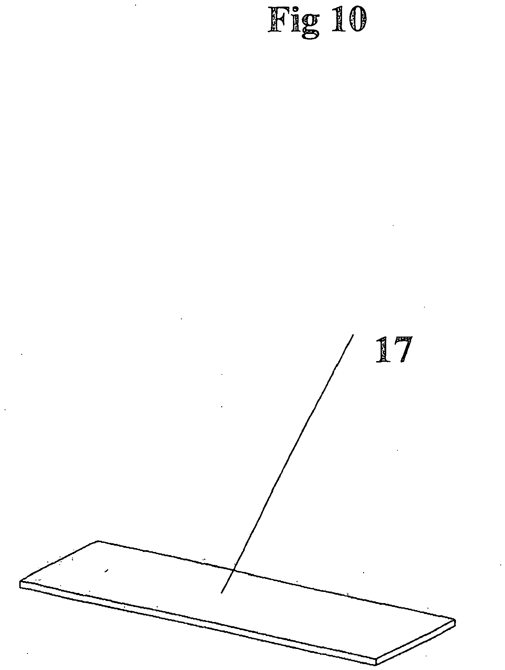

Figure 10 shows the base material: a brazing plate 17 for a brazing clip 14 to be manufactured on the front portion 8 of a brazing block 11.

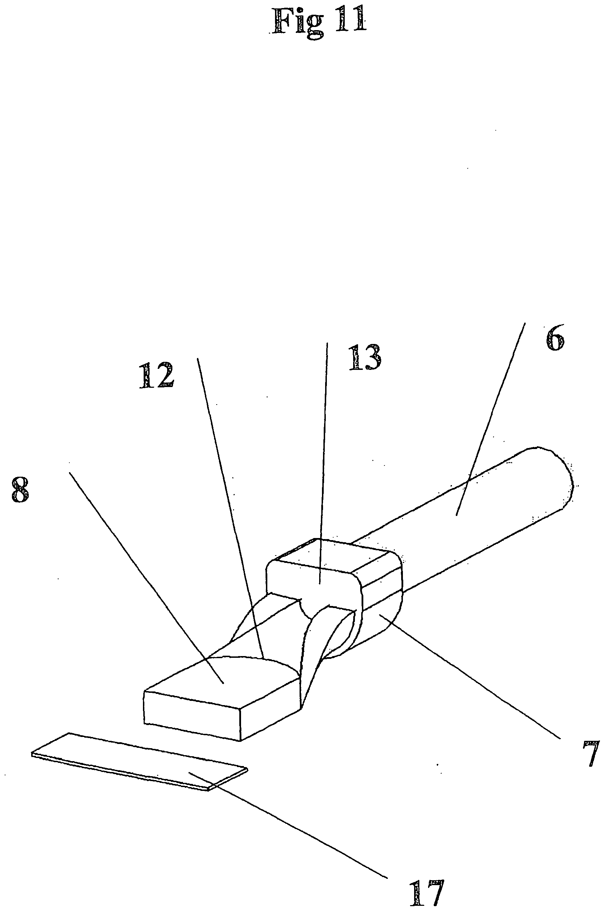

Figure 11 shows an electrically conductive connecting piece 4 in the form of a cable shoe with all included parts, showing a separate base material, a brazing plate 17 for manufacturing of a brazing clip 14 on the front portion 8 of the brazing block 11.

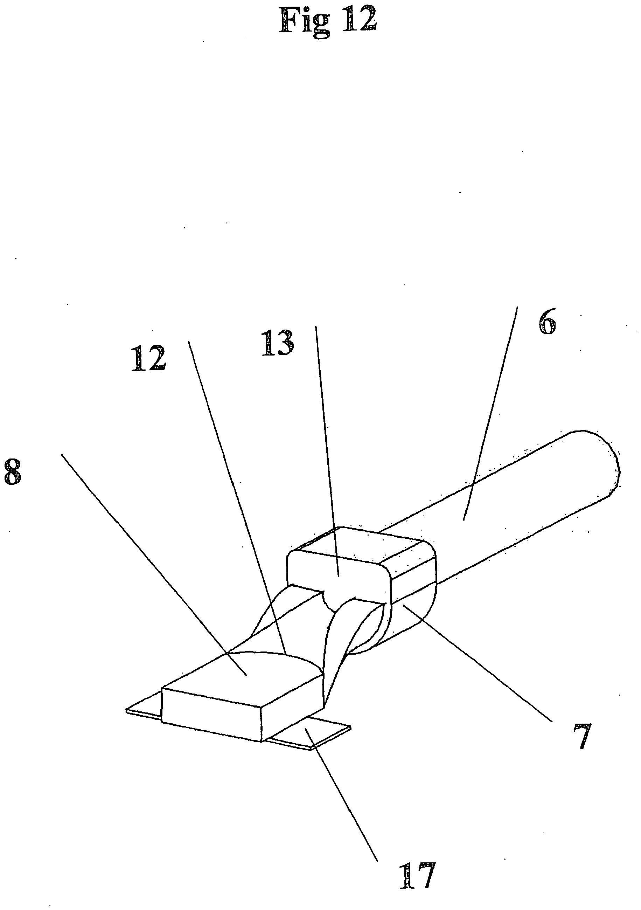

Figure 12 shows an electrically conductive connecting piece 4 in the form of a cable shoe with a separate base material, a brazing plate 17 directly below the front portion 8 of the brazing block 11. The other parts of the connecting piece 4 are shown in the drawing.

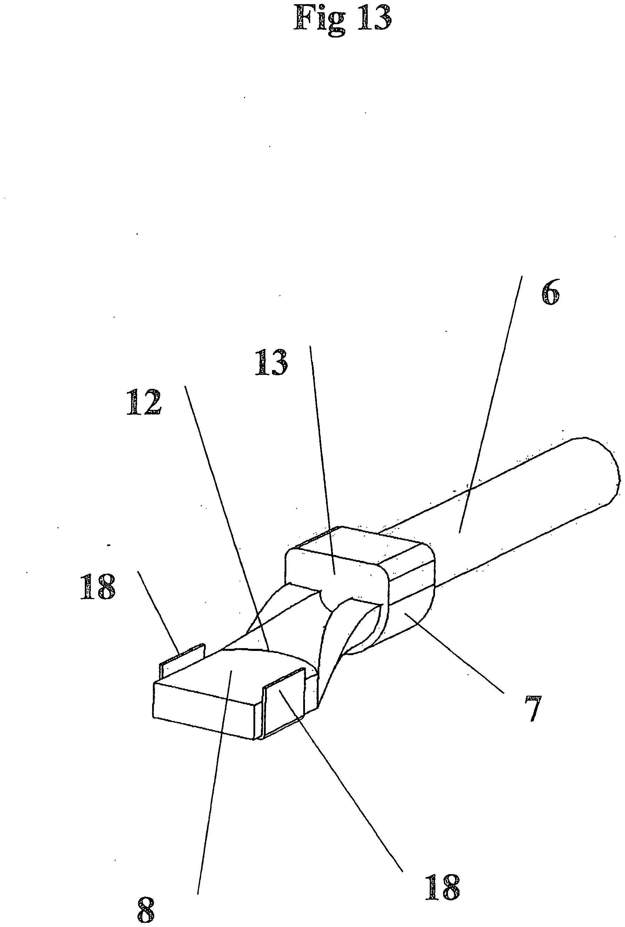

Figure 13 shows an electrically conductive connecting piece 4 in the form of a cable shoe with a separate base material, a brazing plate 17 with folded-up short sides 18 around the sides of the front portion 8 of the brazing block 11.

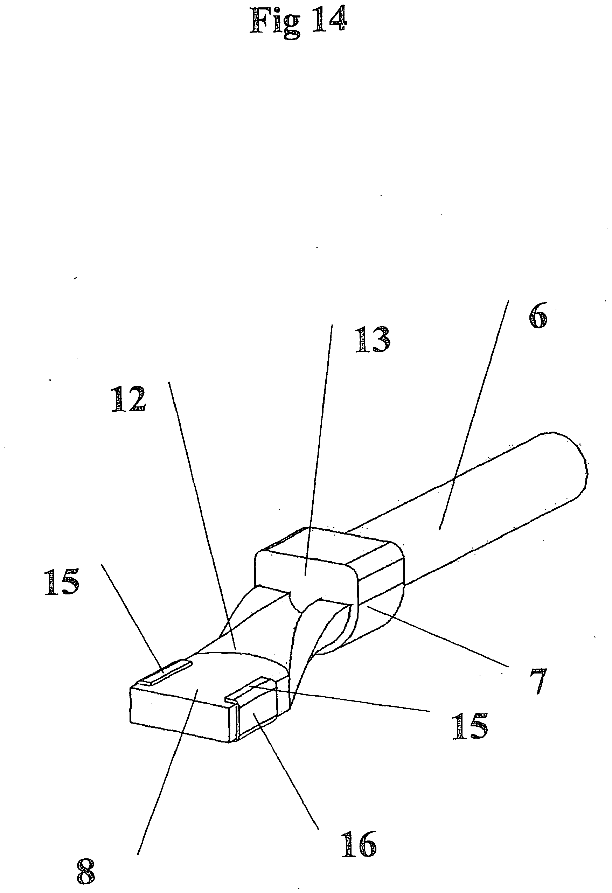

Figure 14 shows an electrically conductive connecting piece 4 in the form of a cable shoe with a separate base material, a brazing plate 17 with side portions 16 and clamping tabs 15 against the front portion 8 of the brazing block 11.

Here, both the side portions 16 and the clamping tabs 15 are located outside the front portion 8 of the brazing block 11. Also shown are the other parts included in the cable shoe.

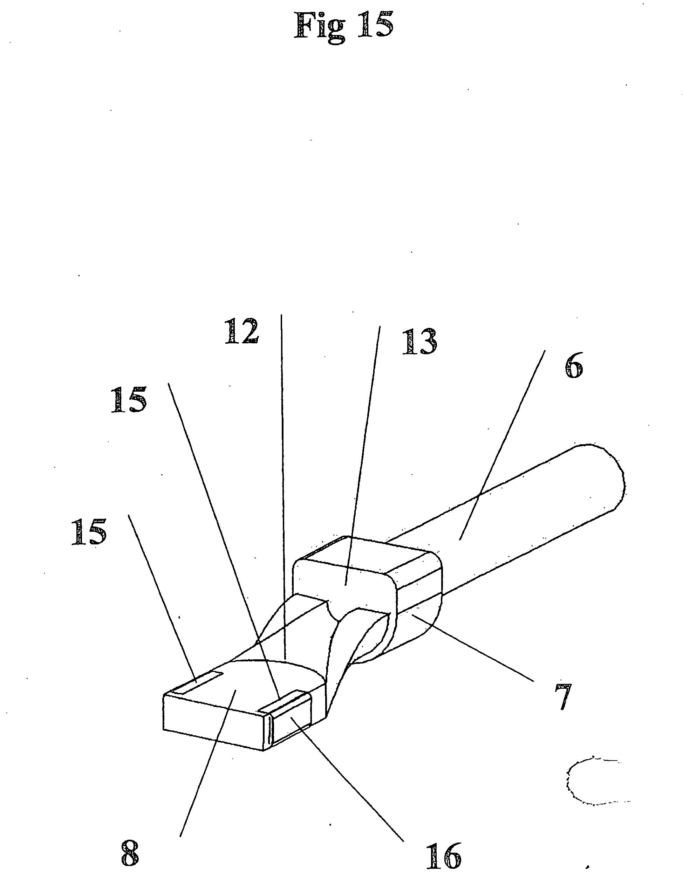

Figure 15 shows an electrically conductive connecting piece 4 in the form of a cable shoe with a brazing clip 14 with side portions 16 and clamping tabs 15 pressed into the front portion 8 of the brazing block 11. These clamping tabs 15 are pressed into the material of the front portion 8, for example, copper.

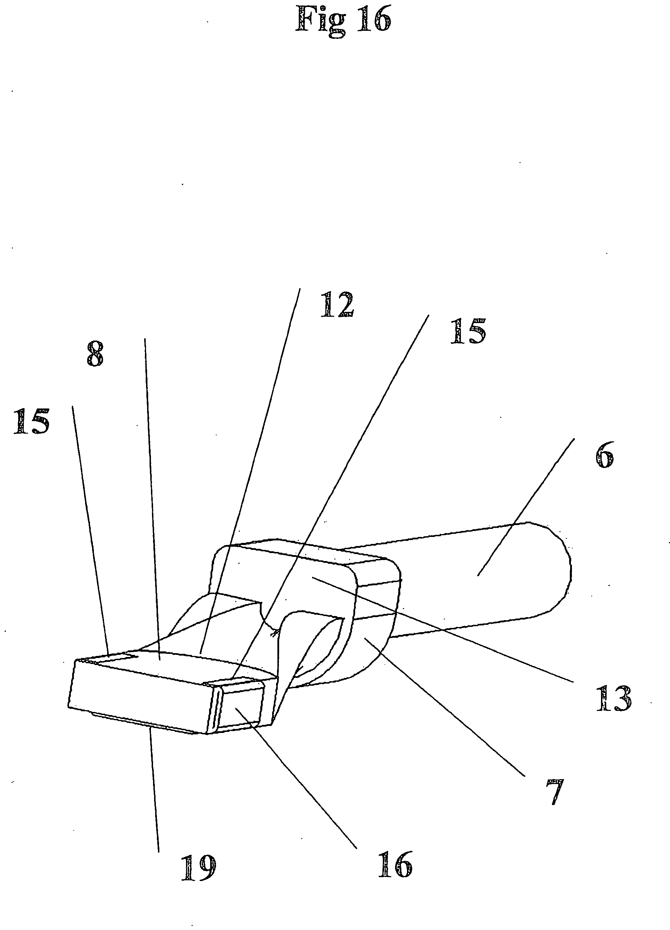

Figure 16 shows an electrically conductive connecting piece 4 in the form of a cable shoe with a brazing clip 14 with side portions 16 on the surface of the front portion 8 of the brazing block 11, and clamping tabs 15 pressed into the front portion 8 of the brazing block 11. The drawing also shows the underlying middle portion 19 of the brazing clip 14, which portion is located outside the front portion 8. The drawing also shows the other parts of the cable shoe.

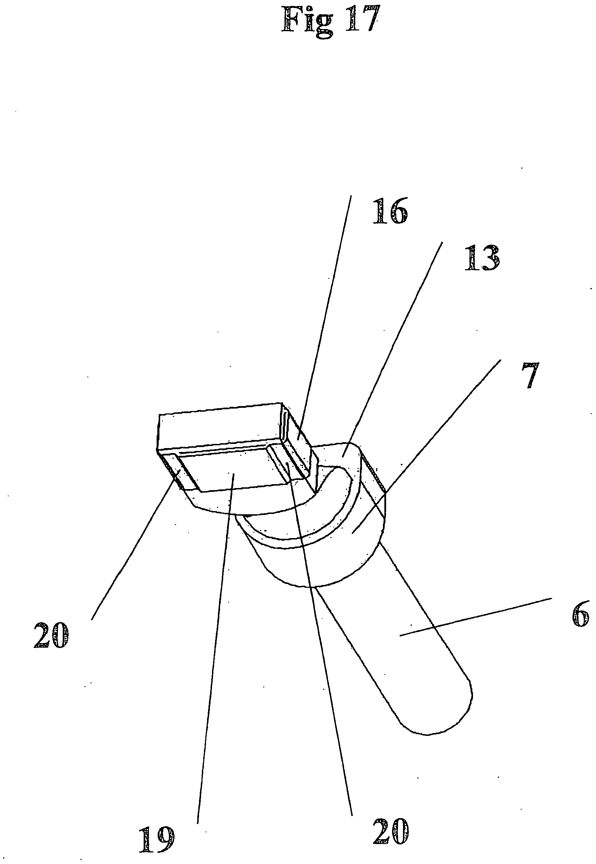

Figure 17 shows the bottom of an electrically conductive connecting piece 4 in the form of a cable shoe with a pressed-on brazing clip 14, showing the brazing clip's 14 underlying, depressed side portions 20 and the underlying middle portion 19 located outside the front portion 8, which middle portion will, at the time of brazing, melt and cover the surface between the bottom of the brazing block 11 and the workpiece 5. The depression of the side portions 20 and the clamping tabs 15 in the front portion 8 provides for good bond strength of the brazing clip 14.

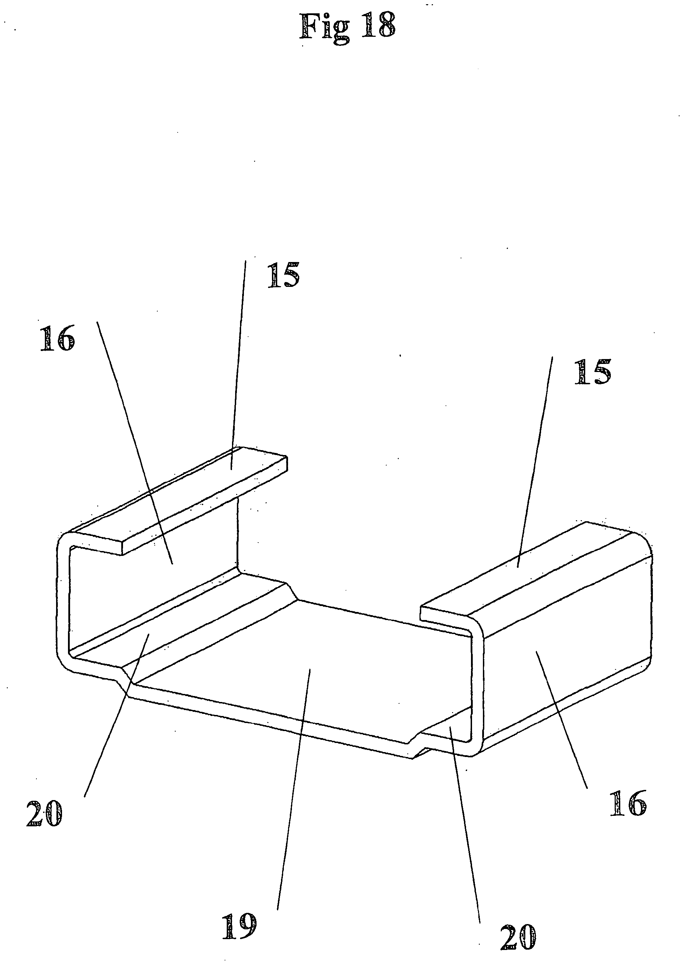

Figure 18 shows how the completed pressed-on brazing clip 14 looks. It displays the brazing clip's 14 underlying middle portion 19 and underlying depressed side portions 20 and the brazing clip's 14 side portions 16 and the clamping tabs 15.

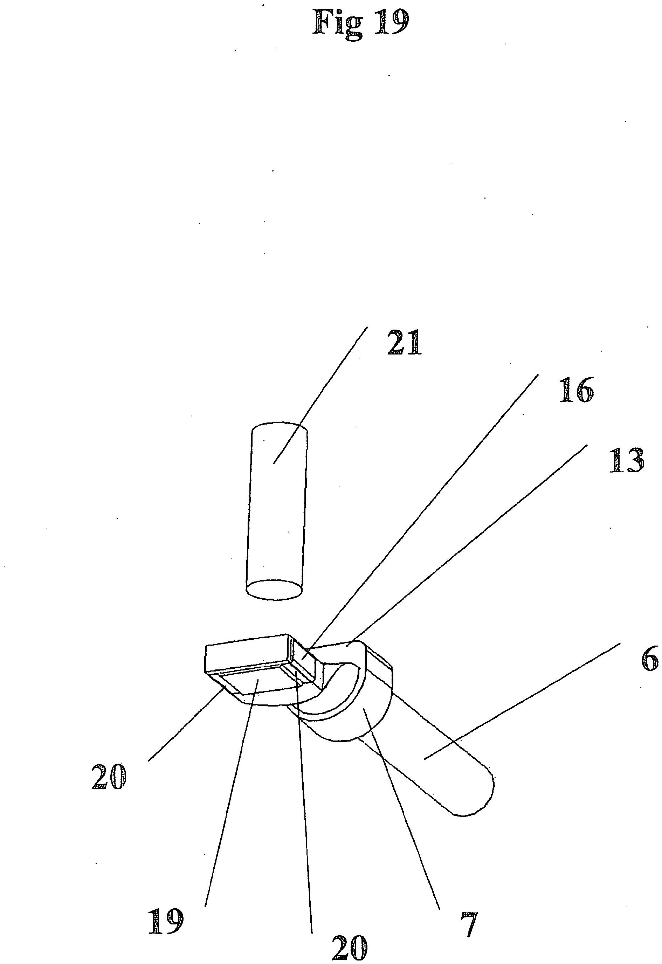

Figure 19 is a tilted bottom view of an electrically conductive connecting piece 4 in the form of a cable shoe with a brazing clip 14 and an electrode 21 from a brazing gun 3, showing the brazing clip's 14 underlying middle portion 19 and underlying depressed side portions 20 and the brazing clip's 14 side portions 16 and the weld joint 13, the cable 6 and the compressed pipe 7.

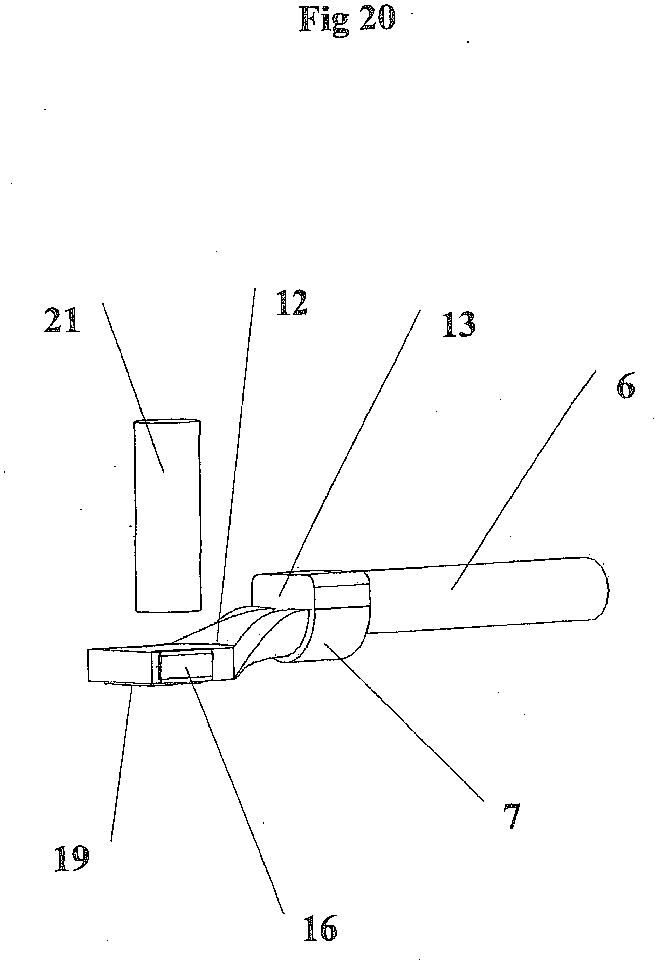

Figure 20 is a side elevational view of an electrically conductive connecting piece 4 in the form of a cable shoe with a brazing clip 14 and an electrode 21 from a brazing gun 3, and the drawing shows the same parts as the previous figure.

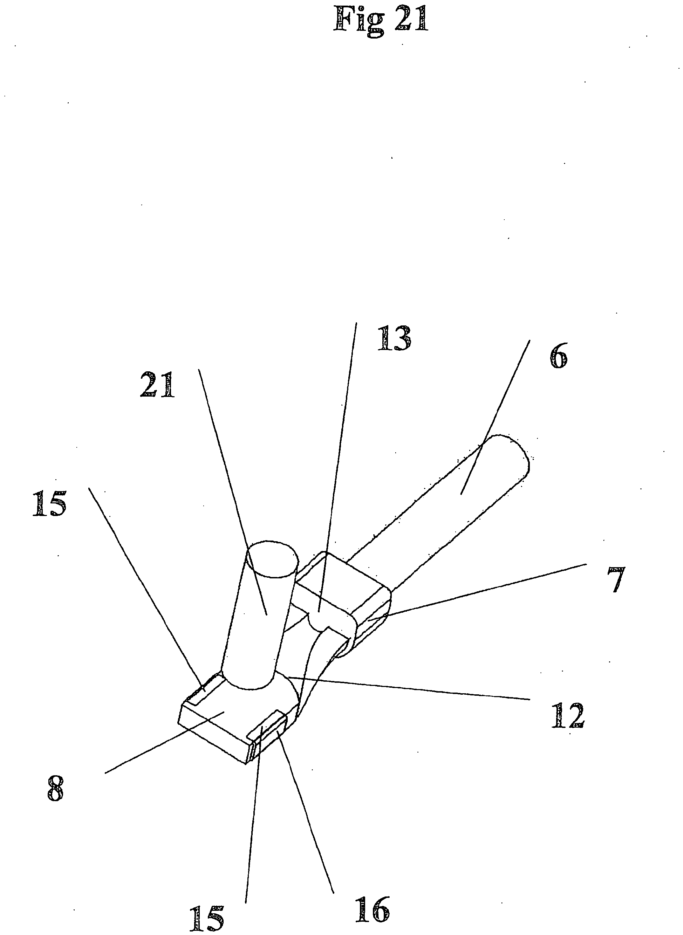

Figure 21 shows an electrically conductive connecting piece 4 in the form of a cable shoe with a brazing clip 14 with its parts and a semicircular raised edge 12 adapted to a guard ring 22 in the brazing gun 3.

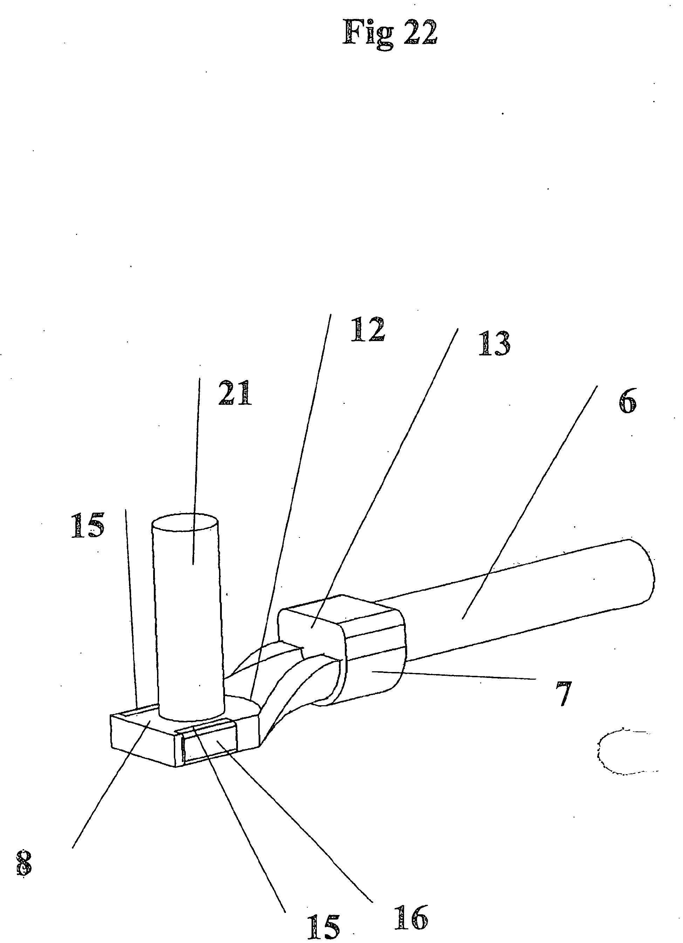

Figure 22 shows an electrically conductive connecting piece 4 in the form of a cable shoe with a carbon electrode 21 directly against the front portion 8 of the brazing block 11. When a voltage is applied, the carbon electrode 21 and the brazing block 11 will have different polarities. The drawing also shows the brazing clip 14 with its different parts and the weld joint 13, the compressed pipe 7 and the cable 6.

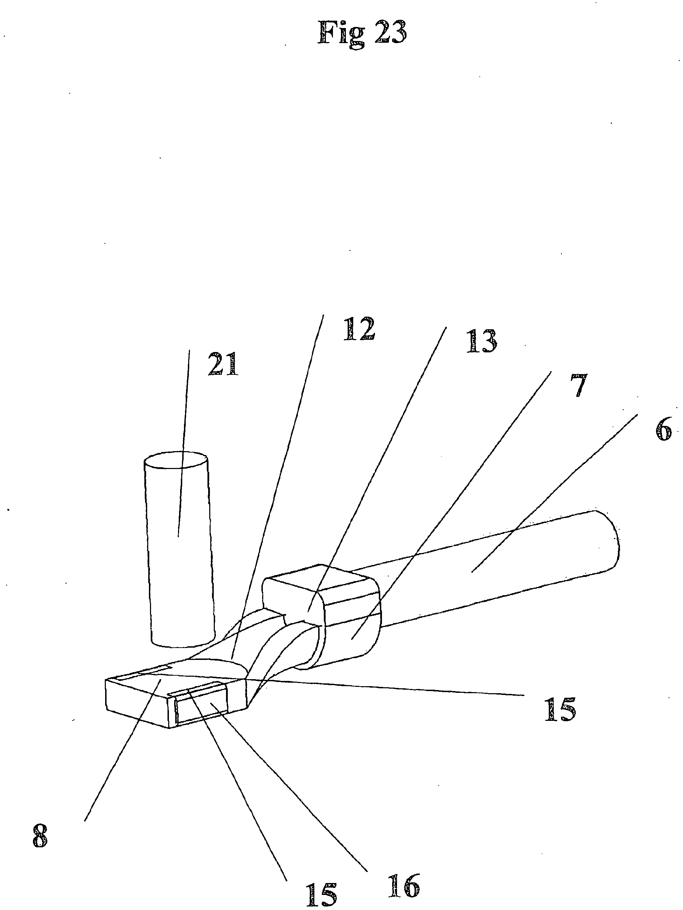

Figure 23 is a side elevational view of an electrically conductive connecting piece 4 in the form of a cable shoe with a brazing clip 14 and an electrode 21 from a brazing gun 3 and a semicircular raised edge 12 adapted to the guard ring 22. This is where the brazing process starts: the carbon electrode 21 is lifted up and an electric arc 34 is formed. The drawing also shows the other parts.

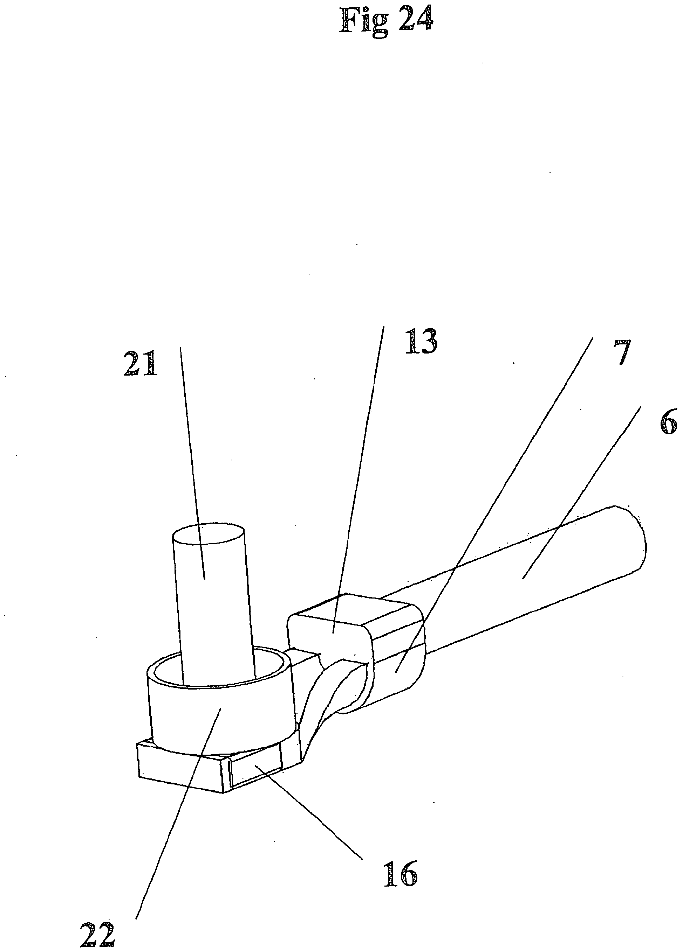

Figure 24 is a side elevational view of an electrically conductive connecting piece 4 in the form of a cable shoe with a brazing clip 14 and a carbon electrode 21 together with a guard ring 22 from a brazing gun 3 placed against the semicircular raised edge 12. The brazing clip 14 with its different parts and the other parts of the cable shoe can be observed in the drawing.

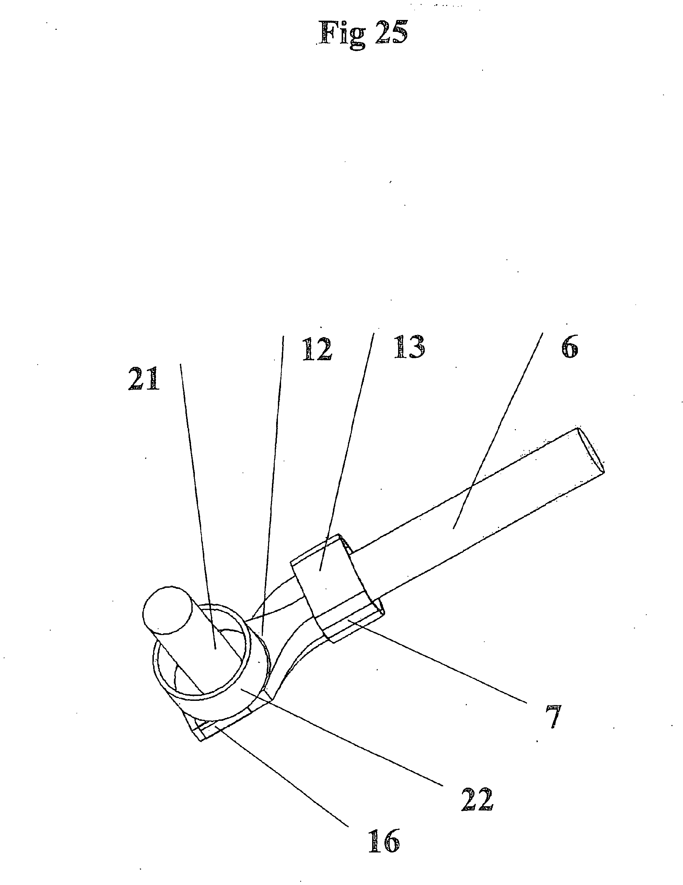

Figure 25 is a top view of the previous drawing, showing clearly how the guard ring 22 fits into the raised guiding edge 12 of the brazing block 11. Because the carbon electrode 21 and the guard ring 22 represent the brazing gun 3, it can be understood that it is easier for the operator to succeed with the brazing.

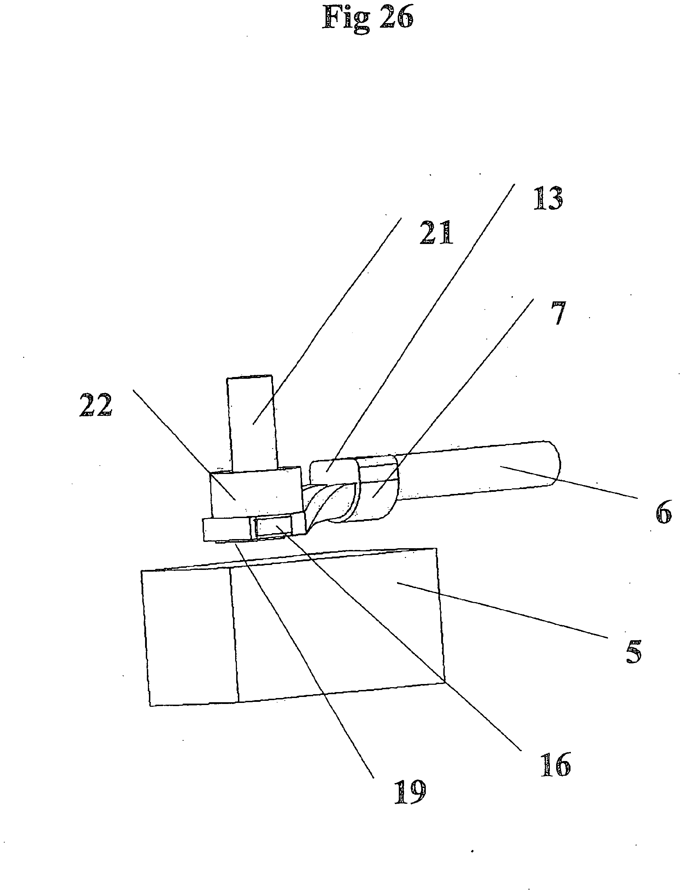

Figure 26 shows how the electrically conductive connecting piece 4 in the form of a cable shoe is moved towards a workpiece 5 by the brazing gun 3 via a carbon electrode 21 and a guard ring 22.

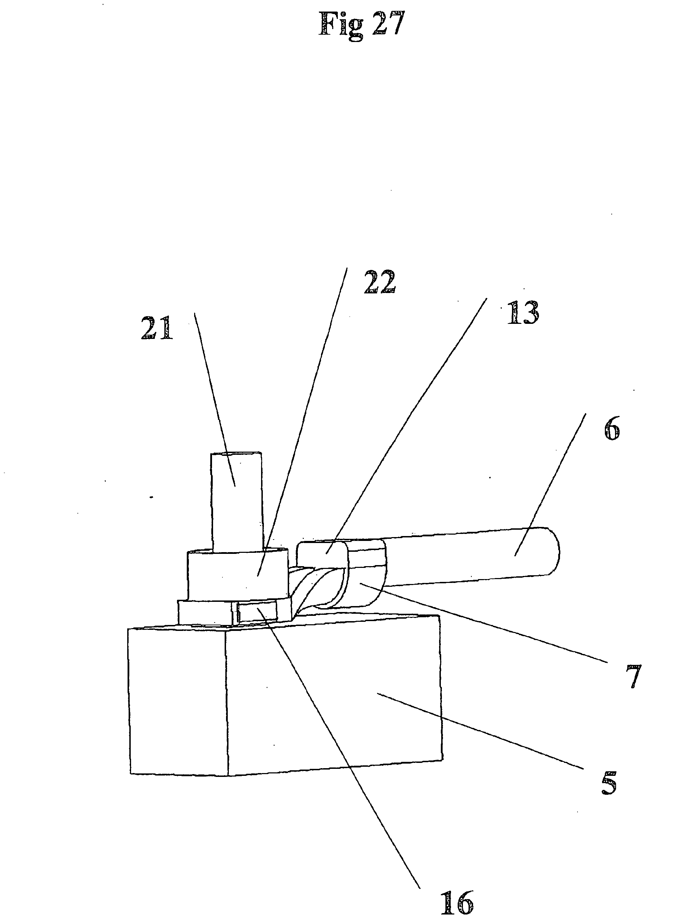

Figure 27 shows how the carbon electrode 21 and the guard ring 22, which are joined with the brazing gun 3, work on an electrically conductive connecting piece 4 and the workpiece 5, brazing and pressing to attach the connecting piece 4 to the workpiece 5. The other parts of the connecting piece 4 can be observed in the drawing.

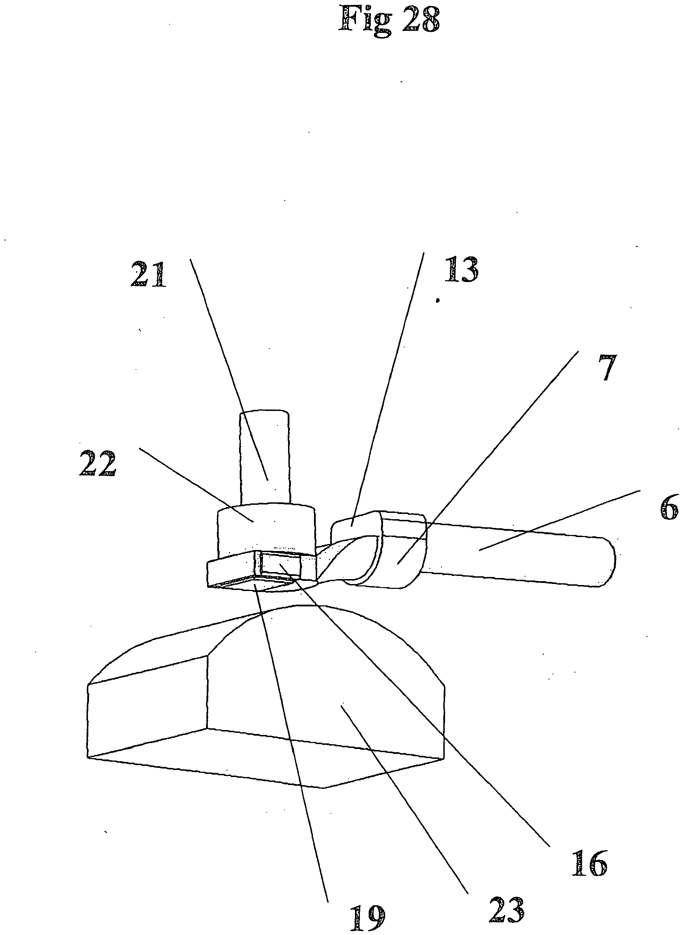

Figure 28 shows an electrically conductive connecting piece 4 in the form of a cable shoe to be brazed onto a non-planar workpiece 23. It is important to obtain an evenly thick braze joint between the brazing block 11 and the non-planar workpiece 23 during brazing.

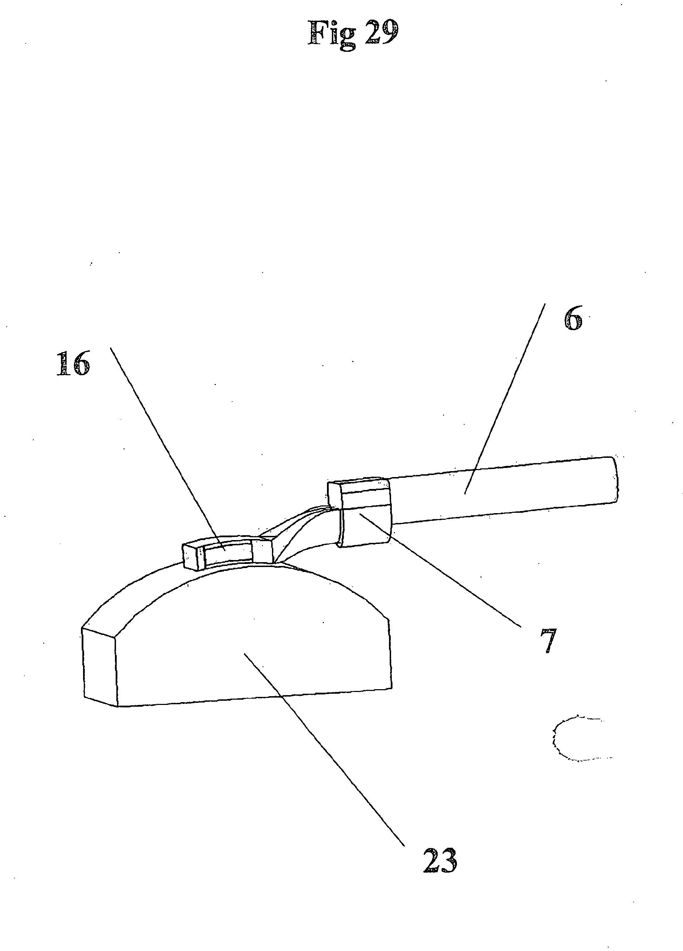

Figure 29 shows an electrically conductive connecting piece 4 in the form of a cable shoe attached to a non-planar workpiece 23. The brazing block 11 has become soft from the heat of the brazing process and its shape follows the non-planar supporting surface or the workpiece 23 and an evenly thick braze joint has been obtained between the brazing block 11 and the non-planar workpiece 23 during brazing.

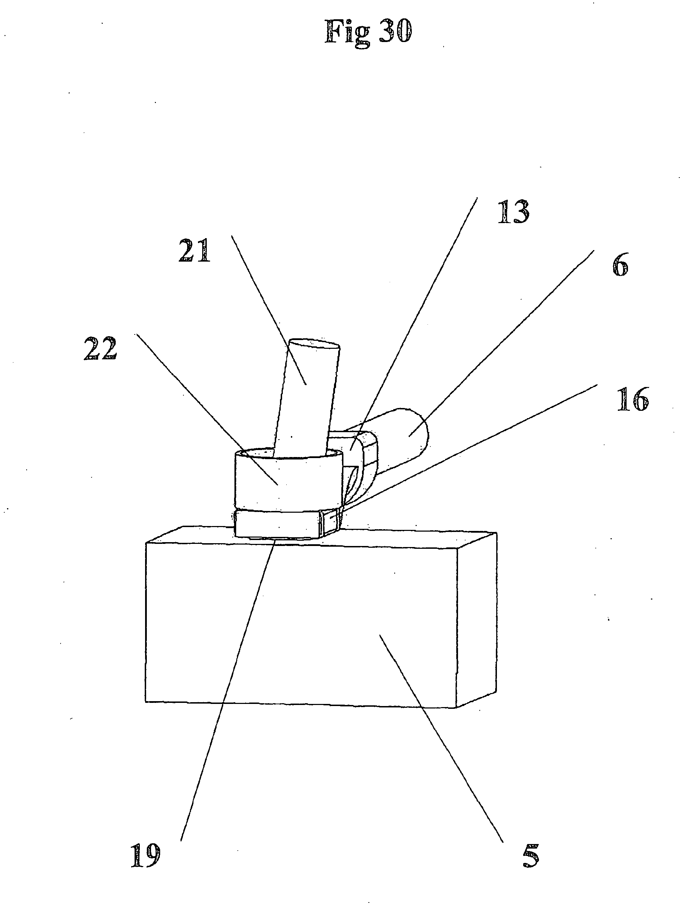

Figure 30 is a view where the brazing gun 3 does not form a 90-degree angle with the supporting surface, the front portion 8 of the brazing block 11. In the brazing gun 3, however, there is a gyro device allowing the guard ring 22 to descend straight onto the front portion 8 of the brazing block 11 and allowing the front portion 8 of the brazing block 11 with the brazing clip's 14 underlying middle portion 19 to descend perpendicularly on the workpiece 5, so that a correct brazing can be performed. The other parts of the cable shoe can be observed in the drawing.

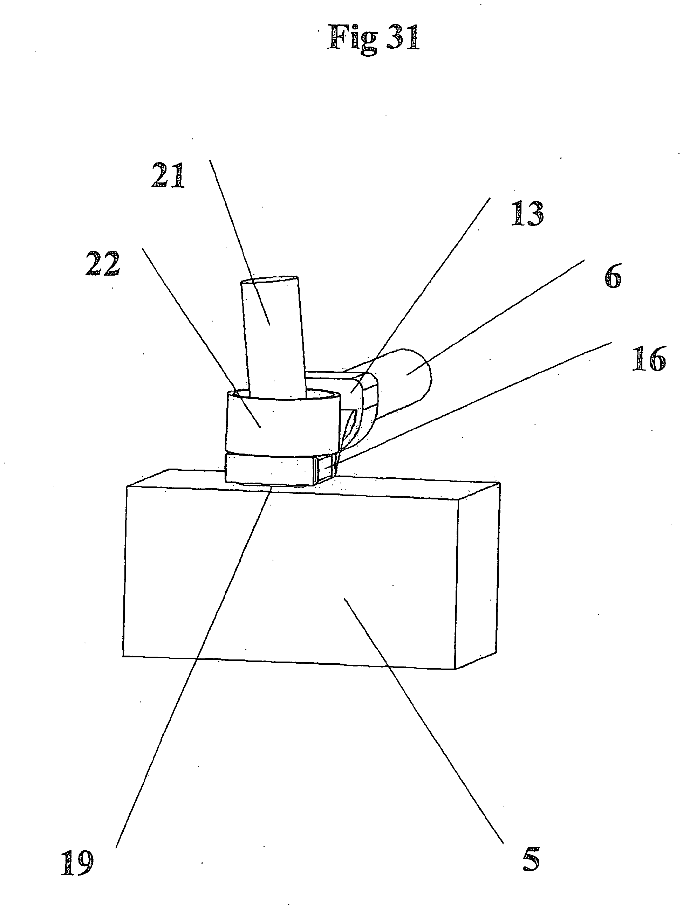

Figure 31 is the same view but with an angular offset in the other direction.

The operator has moved the brazing gun 3 in the other direction without the position of the front portion 8 of the brazing block 11 being affected, thanks to the gyro device in the brazing gun 3.

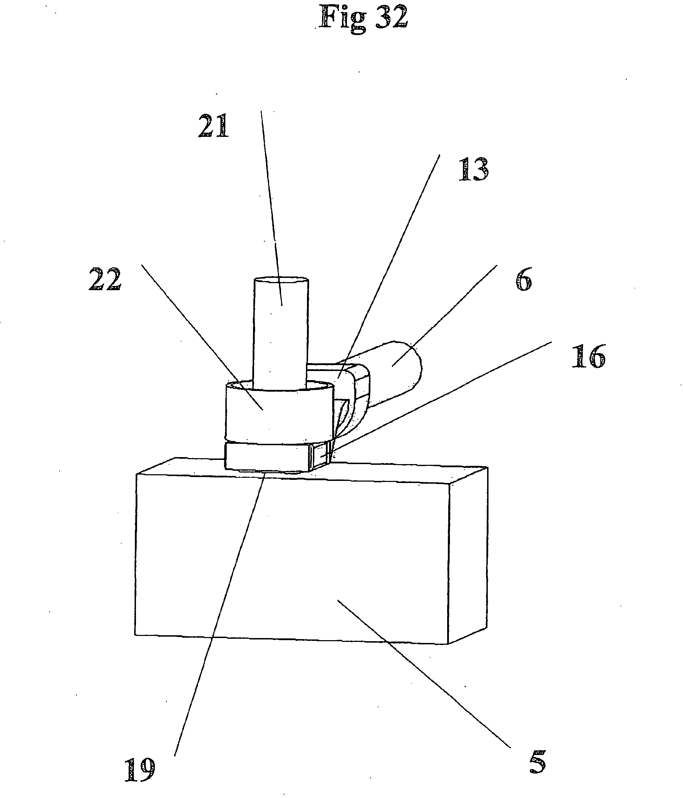

Figure 32 is also the same view of an electrically conductive connecting piece 4 in a brazing process where the brazing gun 3 has a normal position of 90 degrees against the front portion 8 of the brazing block 11, thus also against the workpiece 5.

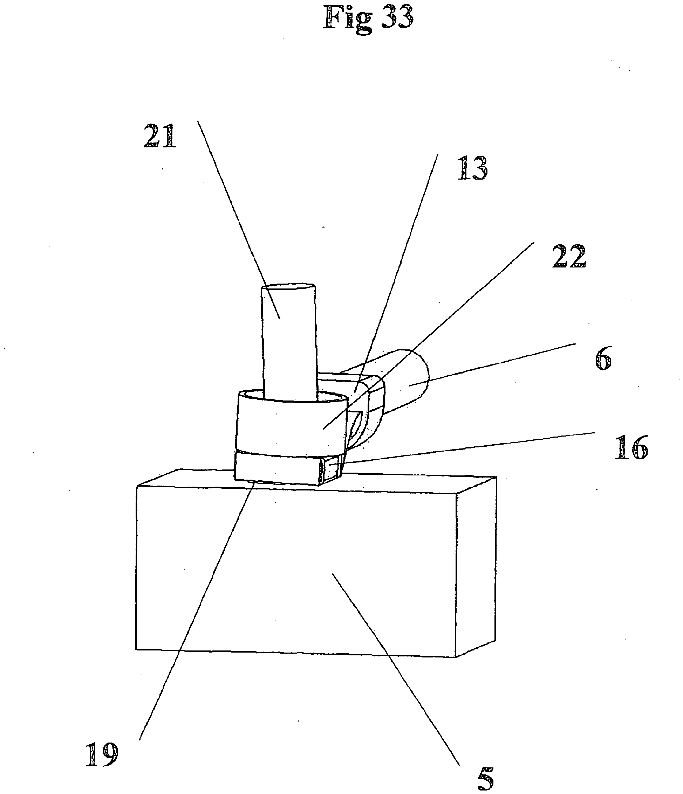

Figure 33 shows how the filler is melted off asymmetrically during the brazing process, and shows the underlying middle portion 19 of the brazing clip 14 with the filler partially melted. In this case, the right-hand portion in the drawing has melted off first. The connecting piece 4 has tilted in relation to the supporting surface 5. The guard ring 22 allows this tilt thanks to the gyro device in the brazing gun 3. The other parts of the cable shoe can be observed in the drawing.

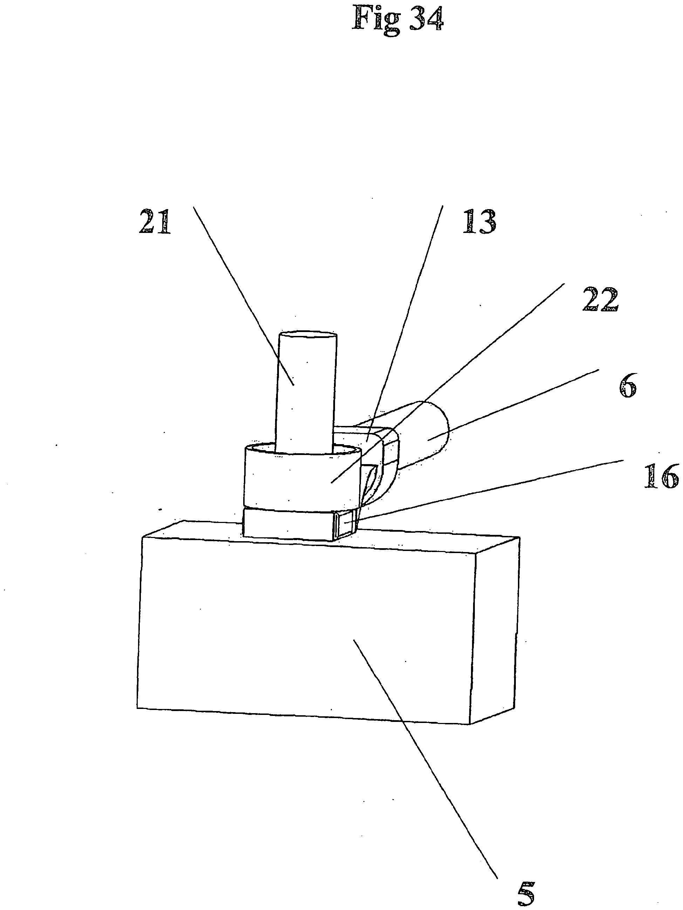

Figure 34 shows a completed brazing where the filler has melted completely. That is, the other left-hand portion of the drawing has melted and the front portion 8 of the brazing block 11 now lies flat against the workpiece 5 and a completed brazing is achieved. An evenly thick braze joint has been obtained between the bottom of the front portion 8 of the brazing block 11 and the workpiece 5 during brazing.

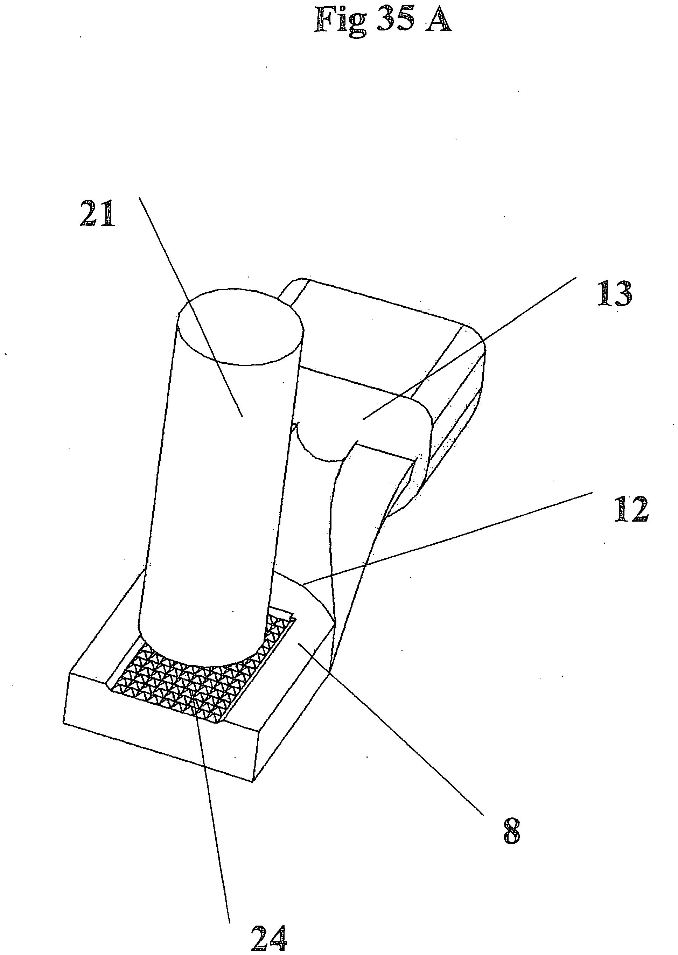

Figure 35 A shows a knurled connecting piece 4 of electrically conductive material, for example, a cable shoe, without a brazing clip 14. The drawing shows a cable 6 and a compressed pipe 7 with a weld or braze joint 13 and a semicircular raised edge 12. On the front portion 8 of the brazing block 11 is a knurling 24. The front portion 8 of the brazing block 11 can also be blasted.

The energy feed in the brazing process is reduced by the front portion 8 of the brazing block 11 being knurled and/or blasted. Heat is transferred from an electric arc 34 to a carbon layer on the front portion 8 of the brazing block 11 released from the carbon electrode 21 in the brazing gun 3. Subsequently, the heat descends to the surface of the front portion 8 of the brazing block 11. By the knurling and/or blasting of this surface, or its exposure to other surface-modifying treatment, a larger interfacing surface is obtained, compared to a smooth surface, which results in faster absorption of energy and thus heating of the brazing block 11. The energy feed can thereby be reduced with a maintained result of the brazing.

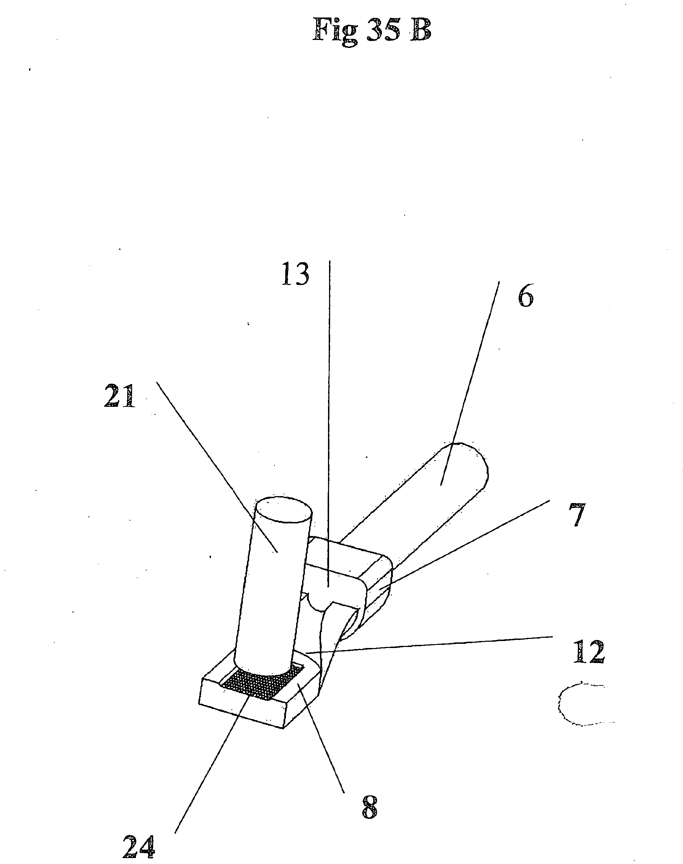

Figure 35 B shows a knurled connecting piece 4 in the form of a cable shoe, and a carbon electrode 21 whose surface area is impregnated. The electric arc 34 of the brazing process works on the knurled surface 24 of the brazing block 11, which results in a larger interfacing surface area, thus achieving a faster energy absorption, but the desired temperature is reached and the energy feed during the brazing process can be interrupted earlier. Consequently, the energy feed is conserved and the battery 1 can be used for more brazings before recharge.

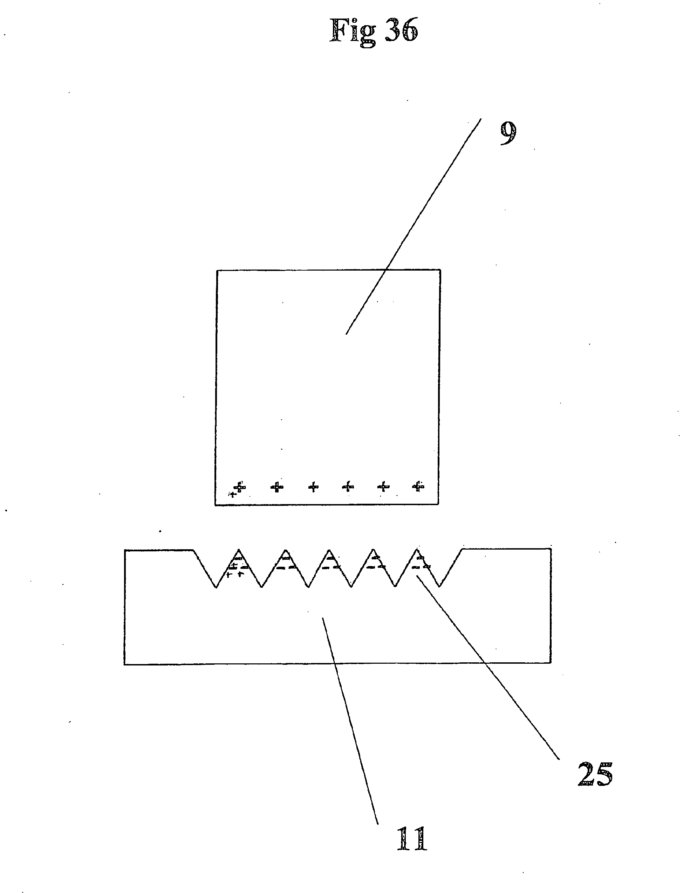

Figure 36 shows the polarisation of the present brazing process with a knurled brazing block 11 of electrically conductive material. Thanks to the knurling 25 and/or blasting or other surface-enlarging treatment, a larger interfacing surface is obtained, as compared to a smooth surface, which results in a faster absorption of energy and consequently heating of the electrically conductive connecting piece 4. Energy feed can thus be reduced without degradation of the brazing outcome. Heat losses through heat conduction are further reduced because of the short brazing duration. The uneven surface results in the electron concentration occurring in local peaks, which facilitates for the electric arc 34 to be ignited and maintained.

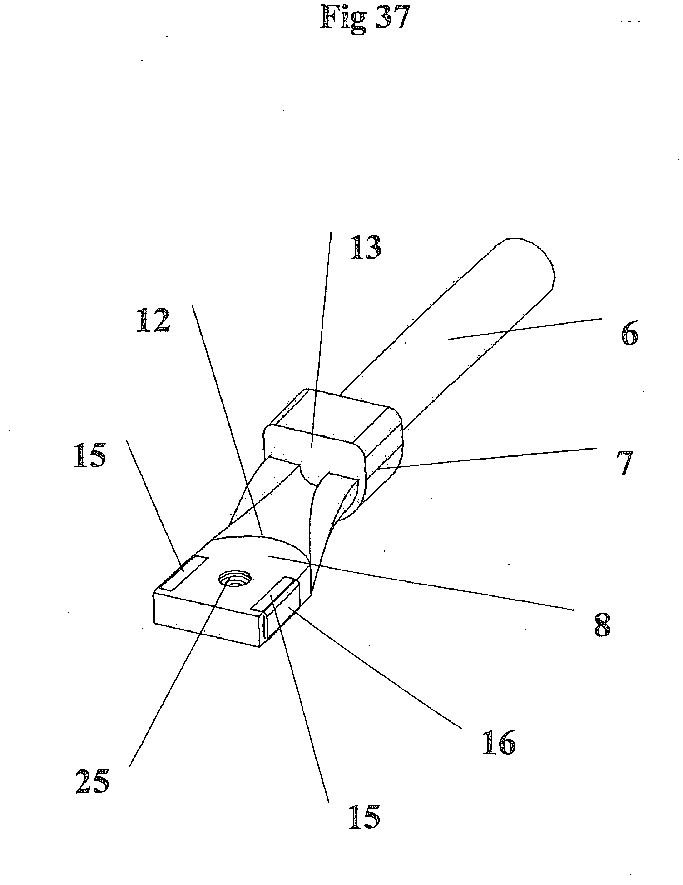

Figure 37 shows a cable shoe with a brazing clip 14 and all their respective included parts. The drawing also shows a cavity 25 on the front portion 8 of the brazing block 11 - this is in order to further improve the carbon layer's bond strength to the front portion 8 of the brazing block 11.

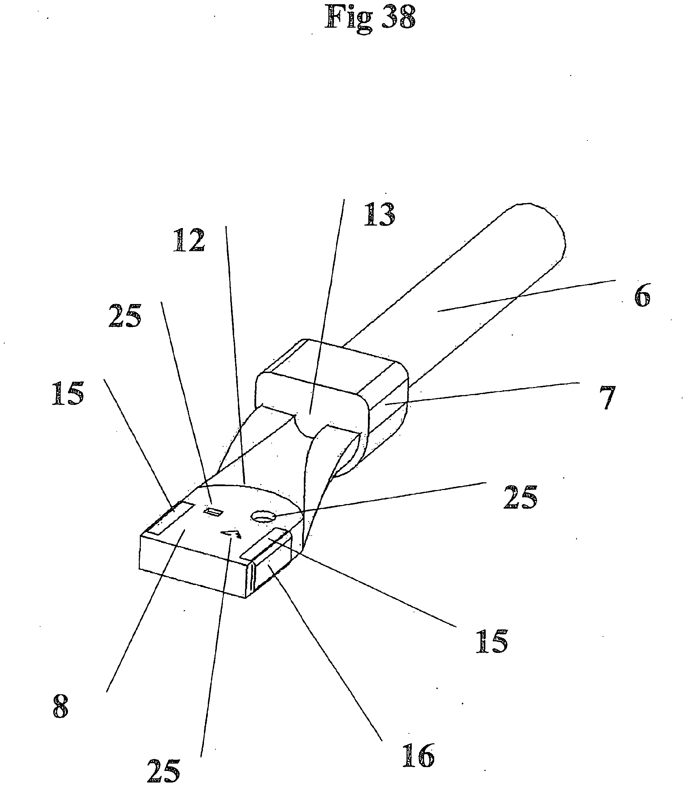

Figure 38 shows variants of the cavities 25 with respect to shape, number and position on the front portion 8 of the brazing block 11. Also visible in the drawing are the brazing clip's 14 side portions 16 and clamping tabs 15 and the weld joint 13, the cable 6 and the compressed pipe 7. The drawing also shows the semicircular raised edge 12.

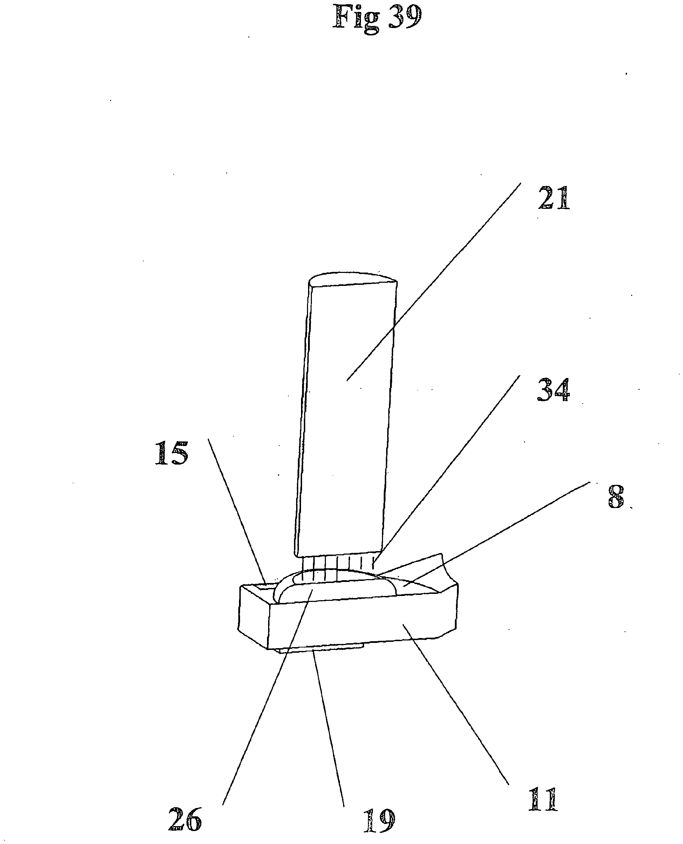

Figure 39 shows a schematic cross-section of an electric arc 34 between the carbon electrode 21 and the front portion 8 of the brazing block 11. Via the electric arc 34, material is transported from the carbon electrode 21, which material settles as a carbon layer 26 on the front portion 8 of the brazing block 11. The carbon layer's 26 tendency to come loose from the supporting surface is mainly determined by three factors, namely:
1. The temperature of the supporting surface during the initial phase of the brazing process.
2. The structure and geometric shape of the supporting surface.
3. The thickness of the carbon layer 26.

The tendency to come loose increases when brazing more heavy-duty connections 4, for example, cable shoes of a greater mass where more energy is required to obtain a good brazing. By the use of the knurling or blasting described above, the carbon layer's bond strength is improved. With the appropriate formula together with the above-mentioned knurling/blasting, a high initial temperature can be reached, which has a positive effect on the bond strength.

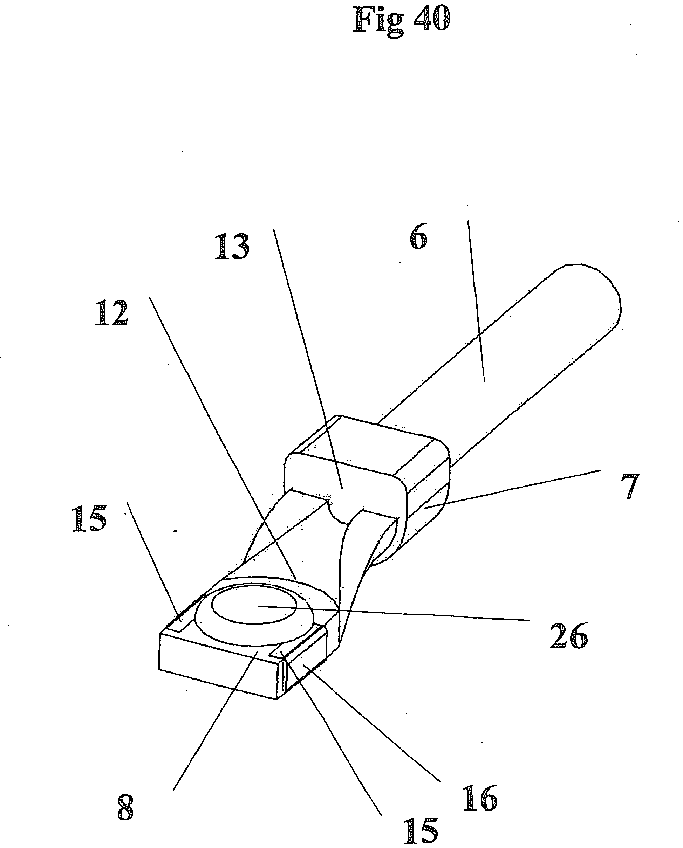

Figure 40 shows a picture of a cable shoe from above with a carbon layer 26 located on the front portion 8 of the brazing block 11, and the brazing clip 14 with its side portions 16 and clamping tabs 15 can be seen. The drawing also shows the weld joint 13, the cable 6 and the compressed pipe 7, and the semicircular raised edge 12.

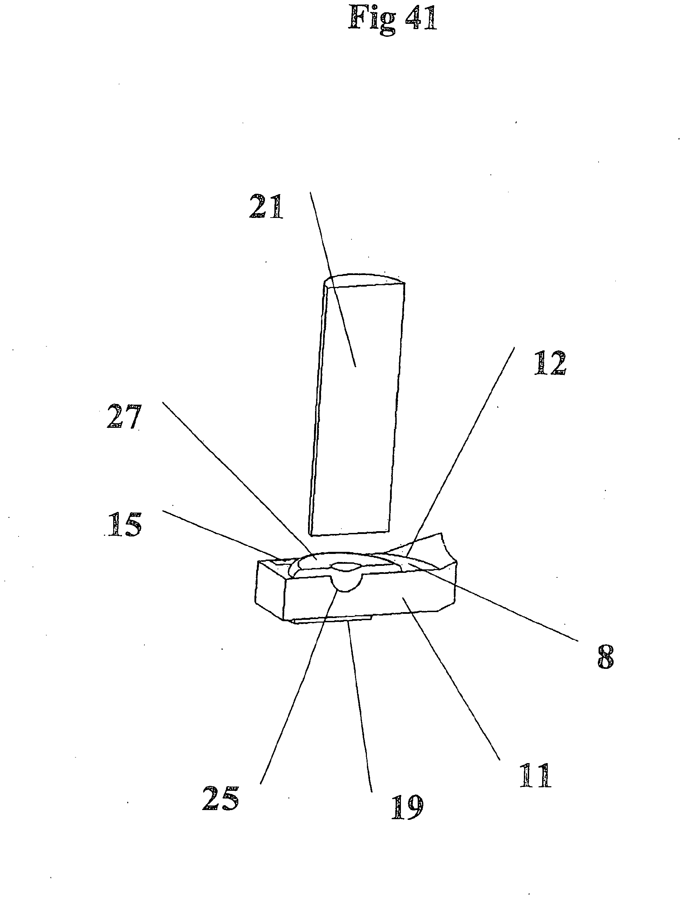

Figure 41 shows, in a cross-section view, the effect of the cavity on the thickness and geometric shape of the released carbon layer 27. In order to reduce the carbon layer's 27 thickness, the front portion 8 of the brazing block 11 is provided with one or a few cavities 25, adapted in size and shape so that a satisfactory reduction of the carbon layer's 27 thickness in the adjacent area is achieved when the cavity 25 absorbs carbon composition from the ambient environment, which, in other cases would have resulted in a thicker carbon layer 27. The cavity and/or the cavities 25 also act geometrically as anchoring points for the carbon layer 27, which increases the bond strength. The drawing also shows the brazing clip 14 with its underlying middle portion 19 and the clamping tab 15, and the semicircular raised edge 12.

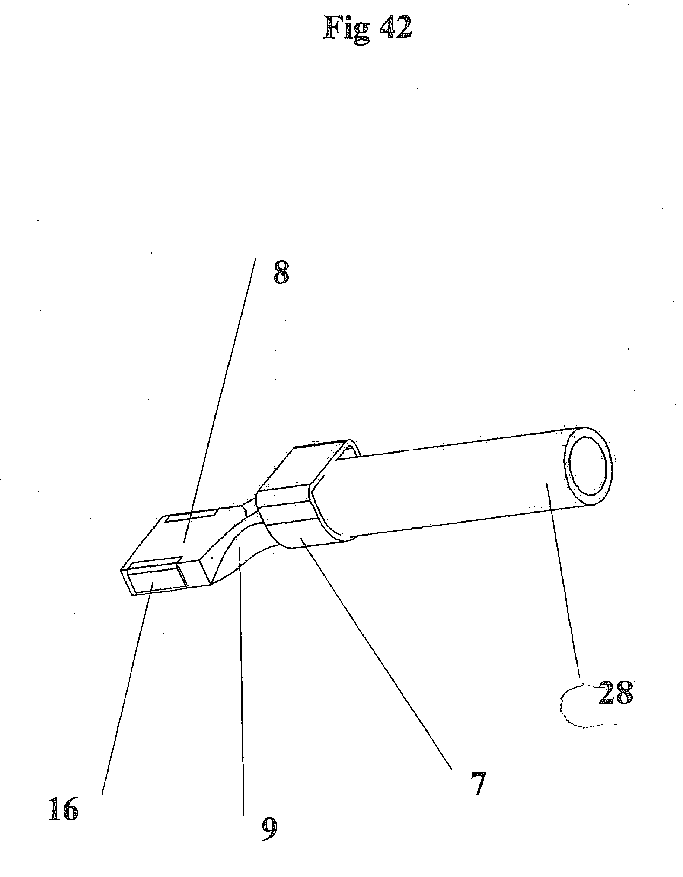

Figure 42 shows a connecting piece 9 with connection pipe 28 for subsequent mounting of cable 6 or thread.

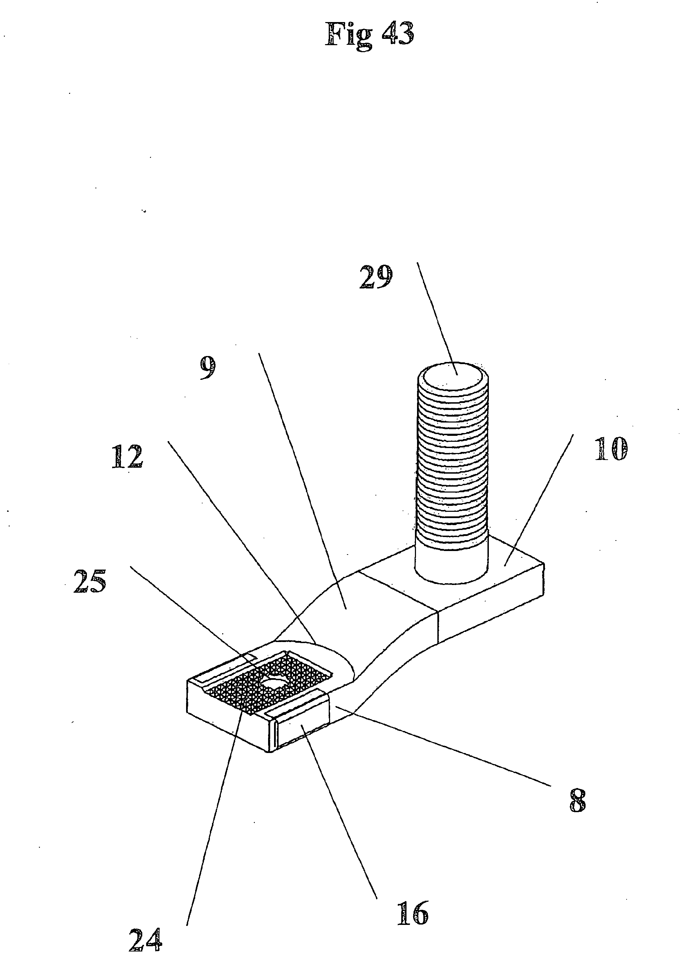

Figure 43 shows a connecting piece 9 where the cavity 25 and the knurling 24 are shown, and a threaded bolt portion 29 is fixed with the end portion 10 of the brazing block 8.

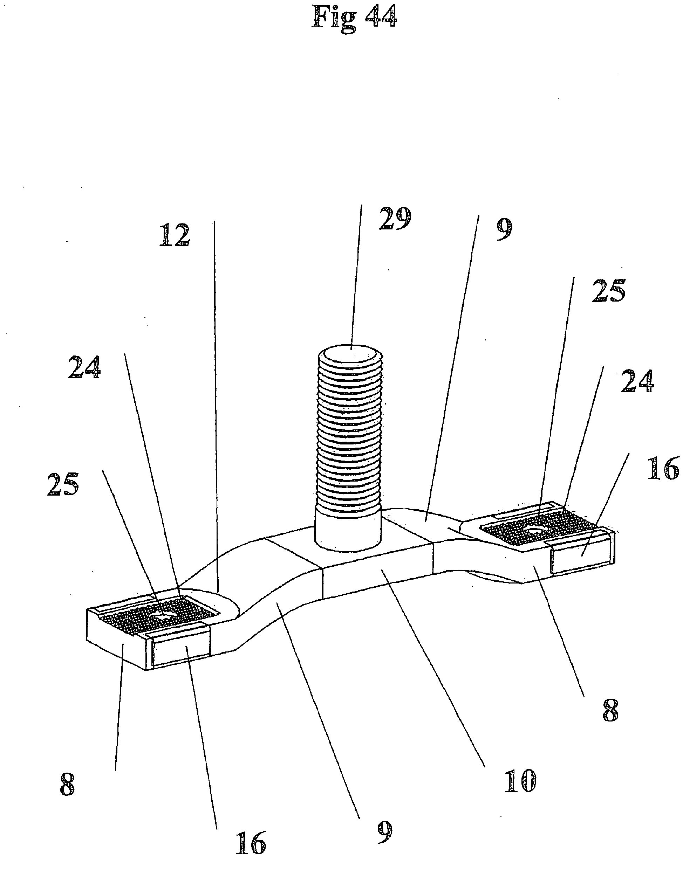

Figure 44 shows a connecting piece 9 consisting of several brazing blocks 8 with a common end portion 10, and a threaded bolt portion 29 fixed onto on the end portion 10.

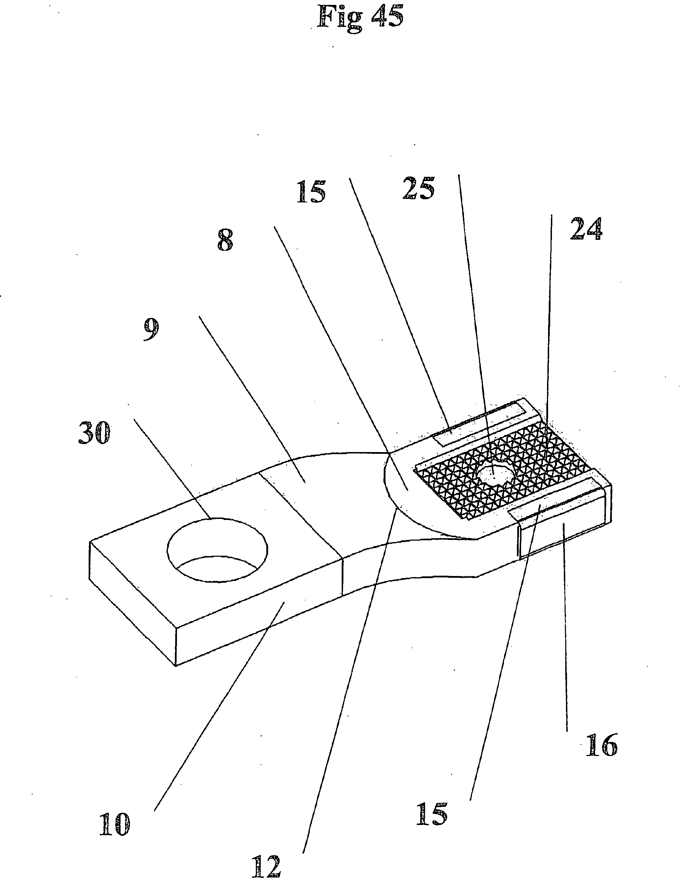

Figure 45 shows a connecting piece 9 with a hole 30 made in the end portion 10 of the brazing block 11. One can see the brazing clip 14 with its included parts, and the knurling 24 and the cavity 25.

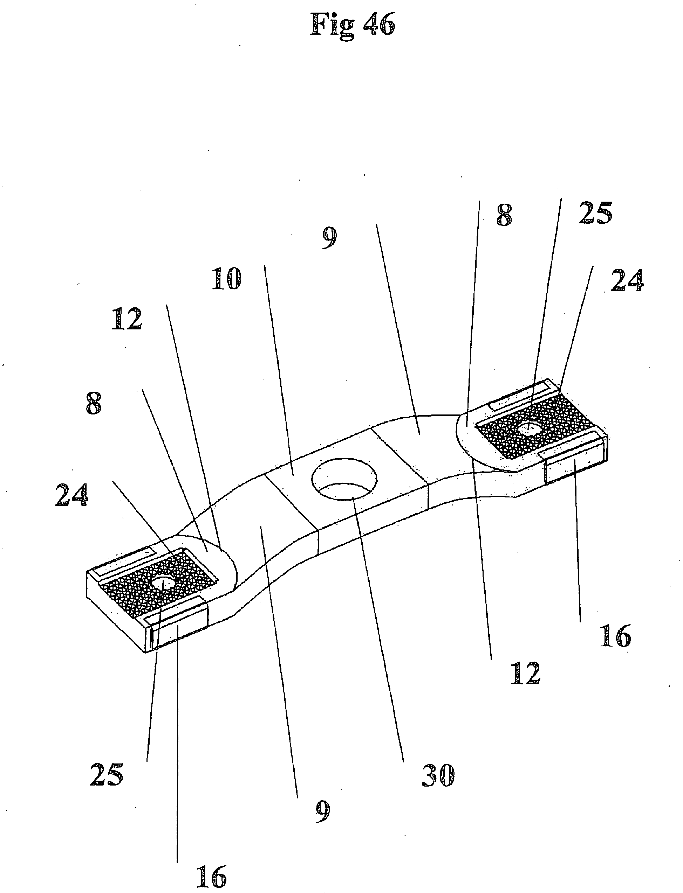

Figure 46 shows a connecting piece 9 consisting of several brazing blocks 8 with a common end portion 10 and a connection hole 30 made therein.

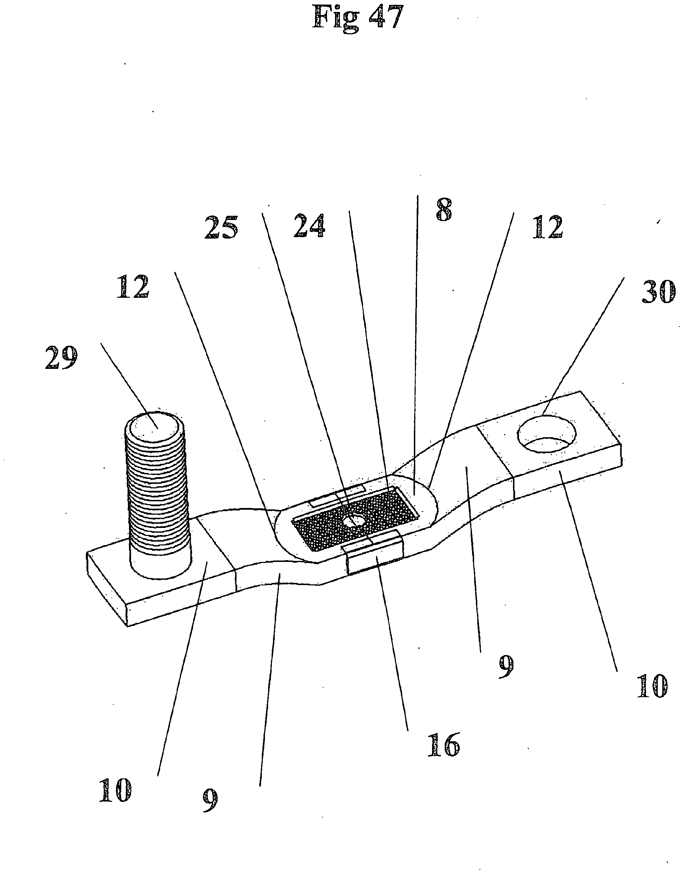

Figure 47 shows a connecting piece 9 with several brazing blocks 11 with a common front portion 8, and a connection hole 30 made in one end portion 10, and in the other end portion 10 a threaded bolt portion 29 is connected.

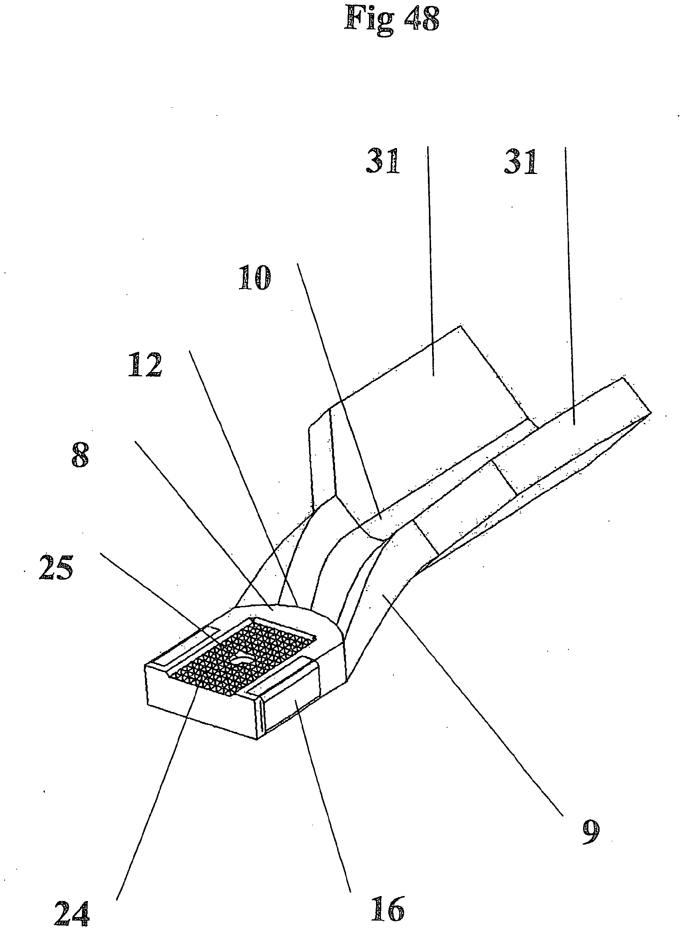

Figure 48 shows a connecting piece 9 with wings 31 protruding from the end portion 10.

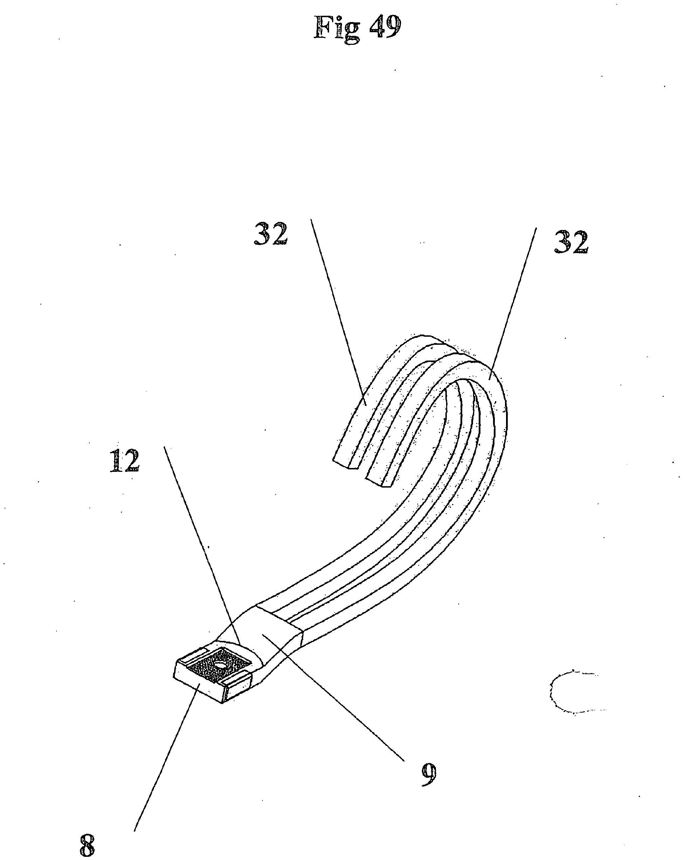

Figure 49 shows a connecting piece 9 where the end portion 10 consists of two protruding tongues 32.

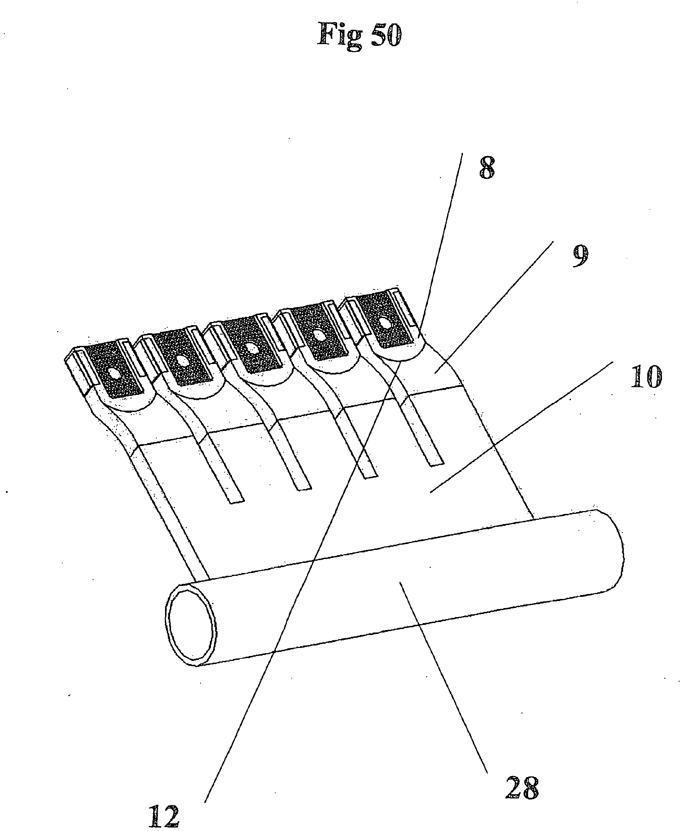

Figure 50 shows a connecting piece 9 consisting of several brazing blocks 8 with a common end portion 10 and a connection pipe 28 for subsequent mounting of one or several threads or cables 6.

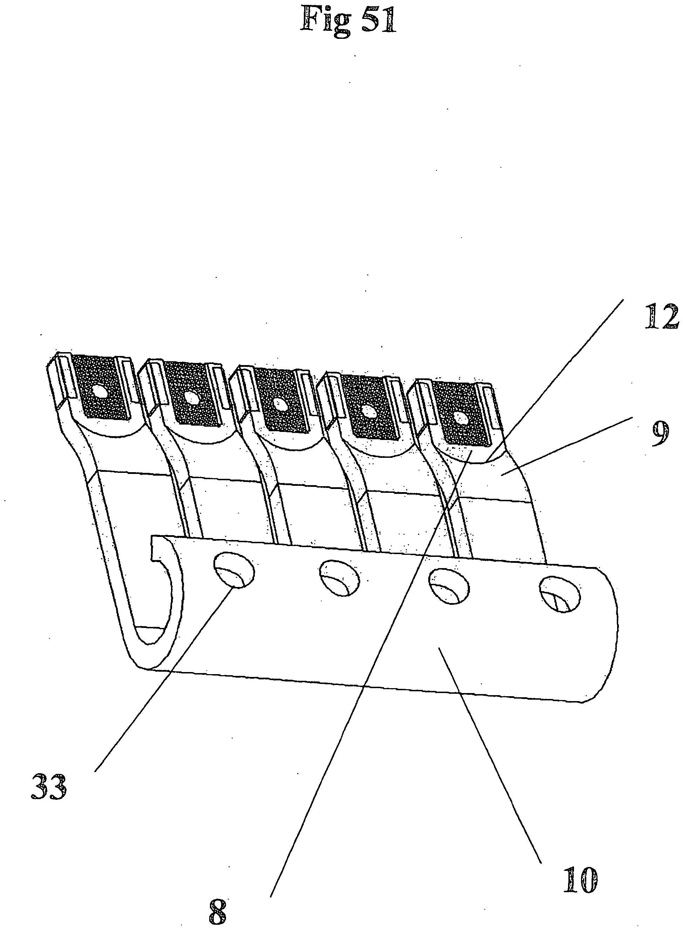

Figure 51 shows a connecting piece 9 consisting of several brazing blocks 8 with a common end portion 10 provided with one or several mounting holes 33.

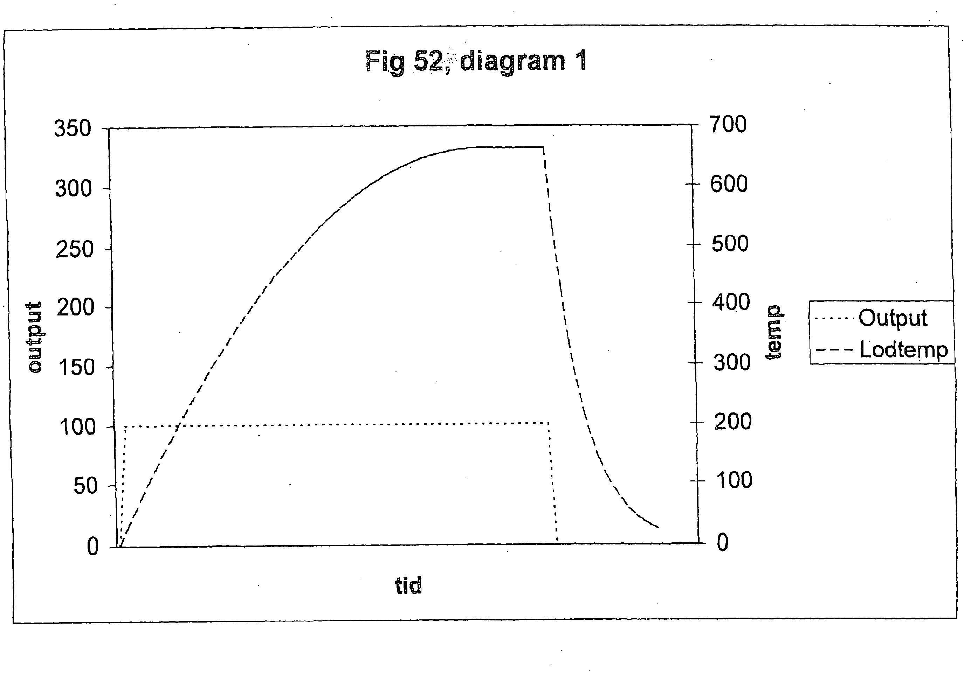

Figure 52 is a graph 1 showing the current or power, i.e., output in relation to time during the brazing process of a formula. The output scale of the graph is one of many possible scales depending on the conditions before a brazing.

Output indicates an average power in the electric arc 34 and the electrode 21, alternatively delivered average current. A constant output makes the temperature rise and level out on the desired value. The output values are chosen to reach a stable final temperature in the brazing. The filler's melting point is about 650 degrees Celsius. When the temperature exceeds 720 degrees Celsius in steel that subsequently cools off fast, martensite is formed. "Filler temp" indicates the brazing clip's 14 temperature on the bottom of the connecking piece 4. The time is very short and depends on the working material, heat losses, filler material, etc.

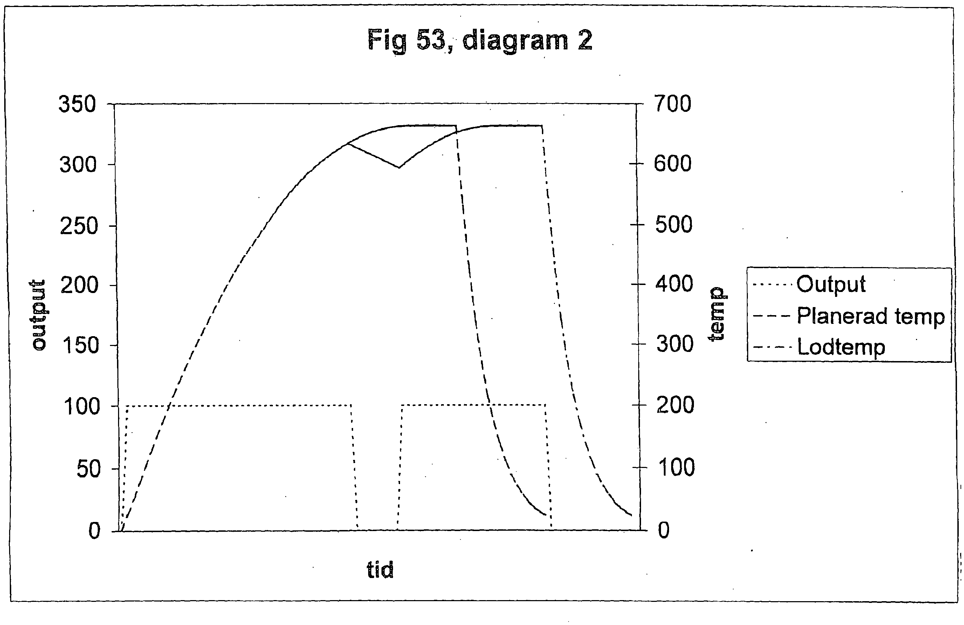

Figure 53 is a graph 2 depicting a specific situation. Graph 2 of the drawing shows the result of an output interruption. The temperature curve "Planned temp" equals the one shown in Figure 52 for graph 1. If, for some reason, the electric arc 34 is now extinguished during the brazing process, the output will be interrupted, which is detected by the electronics unit 2. The electrode 21 is then lowered towards the surface of the front portion 8 of the brazing block 11, whereupon it is lifted anew and the electric arc 34 is restarted. This procedure is repeated a number of times until the electric arc 34 is ignited. Graph 2 of the drawing shows an output interruption with a corresponding fall in temperature.

When output is resumed, the brazing is completed. The total time is prolonged, owing both to the actual time loss during the interruption, and to the compensation for the fall in temperature during the interruption. This interrupt procedure prevents loss of material and energy that would be the result of a failed, interrupted brazing. Furthermore, the additional work effort of removing the connection 4 and re-grinding the base material is avoided.

The principles of the present invention are a new method to manufacture a new type of connecting piece of electrically conductive material which can use all types of cables or thread of small as well as large diameter in a temperature-controlled brazing process, obtaining a brazing which, under the braze joint after the brazing, is free from martensite. With the present invention, one should also increase the bond strength of the carbon layer on the connecting piece by knurling and/or blasting the connecting piece and providing it with one or a few cavities, which comprise anchoring points for the carbon layer and also drain the carbon layer to a thinner layer. This enables a more secure brazing, and by regulating and controlling current and power, one can save energy, time and material, and reduce the number of failed brazings. Furthermore, it is possible to better secure the brazing clip to a connecting piece, for example, a cable shoe, so that it does not easily come off the cable shoe when handled by the operator and during transportation, and to obtain an evenly thick braze joint between the cable shoe and the workpiece when brazing according to the new brazing process.

The drawings show only some embodiments of the invention, but it should be noted that it can be designed in many different ways within the scope of the subsequent claims.

A connecting piece of electrically conductive material, preferably a cable shoe, a holder or a connection device, which is to be joined with another object of electrically conductive material using a brazing process without residual detrimental martensite structure in this other object, comprises a brazing block 11, wherein at least the top side of the front portion 8 of the brazing block 11 having had its surface enlarged by blasting and/or knurling 24 or other surface-modifying measure.so that the heat-absorption capability of the front portion 8 from the electric arc 34 manipulating the surface and the carbon deposit 26 formed on the surface by the carbon electrode has increased, which thereby enables a rapid initial increase in temperature in the surface layer during the brazing process the surface layer, resulting in a more secure connection between the carbon layer 26 and the top side of the front portion 8, a rapid initial increase in temperature in the front portion 8 and in the brazing clip 14, resulting in a reduction of oxidation interference before the braze joint has been formed, and a relative reduction in cooling effect, mainly by heat conduction partially because of a changed ratio of surface to mass, partially because of the fact that the matter diverting the heat does not reach the higher temperatures at which the heat conductivity of the substance increases, which factors thereby together enable a dimensional increase of the connecting piece 4 and a relative reduction of the energy necessary for the brazing process, and the local ridges and peaks functioning to concentrate electrons or electron holes to facilitate the ignition and maintaining of an electric arc 34 between the joint part and the carbon electrode 21, and cavities 25 made in the surface draining and reducing the thickness of the carbon deposit 26 and comprising anchoring points for the carbon deposit 26.

## Claims

1. A method of manufacturing a connecting piece of electrically conductive material, preferably a cable shoe, holder or connection device, which is to be joined with another object of electrically conductive material using a brazing process without residual detrimental martensite structure in the object under the braze joint, ***characterised* in that**
a homogeneous body is formed into a brazing block (11) consisting of front portion (8), middle portion (9) and end portion (10),
the brazing block (11), in its front portion (8), is compressed by a brazing clip (14) to form a joint part, the brazing clip (14) consisting of two clamping tabs (15), side portions (16), an underlying middle portion (19) and two underlying parts (20),
the two underlying parts (20) and the two clamping tabs (15) are pressed into the front portion (8) of brazing block (11), wherein the clamping tabs (15) are pressed into the top side of the brazing block (11), and wherein the two side portions (16) and the underlying middle portion (19) are located outside the front portion (8), so that, at the time of brazing, the underlying middle portion (19) will melt and cover the surface between the bottom of the brazing block (11) and the object, the brazing clip (14) being oriented in a transversal direction with respect to the brazing block (11), and
the middle portion (9) of the brazing block (11) being formed so that a semicircular raised guiding edge (12) of a shape adapted to a guard ring (22) attached during the brazing process is formed in connection with the front portion (8), and
the surface of the front portion (8) of the brazing block being superficially modified by blasting, knurling and/or with cavities, or other surface-modifying measure,
and the end portion (10) of the brazing block (11) being formed to a co-operating part for attachment to a cable (6), a threaded bolt portion or a connecting piece (4), and
the brazing block (11) alone or joined in appropriate constellations using, for example, pressing, brazing, riveting, drilling or welding with other co-operating parts such as rings, pipes, threaded bolt parts, holes, wings, tongues, hooks or other brazing-block parts, as well as cables or threads, form a connecting piece (4), for example, cable shoe, holder or connection device.

2. A connecting piece of electrically conductive material, preferably a cable shoe, a holder or a connection device, which is to be joined with another object of electrically conductive material using a brazing process without residual detrimental martensite structure in this other object,
***characterised* in that**
the connecting piece consists of a homogeneous brazing block (11) and a brazing clip (14) forming a joint part,
the brazing block (11) consisting of front portion (8), middle portion (9) and end portion (10), the middle portion (9) being formed so that a semicircular raised guiding edge (12) of a shape adapted to a guard ring (22) attached during the brazing process is formed in connection with the front portion (8), and
the brazing clip (14) consists of two clamping tabs (15), side portions (16), an underlying middle portion (19) and two underlying parts (20), and encompasses the front portion (8),
the two underlying parts (20) and the two clamping tabs (15) being pressed into the front portion (8) of brazing block (11), wherein the clamping tabs (15) are pressed into the top side of the brazing block (11), and wherein the two side portions (16) and the underlying middle portion (19) are located outside the front portion (8), so that, at the time of brazing, the underlying middle portion (19) will melt and cover the surface between the bottom of the brazing block (11) and an object,
at least the top side of the front portion (8) of the brazing block (11) having had its surface enlarged by blasting and/or knurling (24) or other surface-modifying measure.

3. A connecting piece of electrically conductive material according to Claim 2,
***characterised* in that** the brazing clip (14) is formed from a piece of sheet metal not being hole-punched, and both overlying clamping tabs (15) of the brazing clip (14) being pressed into the top surface of the front portion (8) of the brazing block (11) while the side portions (20) of the bottom surface of the brazing clip (14) have been pressed into the brazing block, and no flux exists between the brazing block and the brazing clip, and corners and short sides (16) of the brazing clip not protruding outside the body of the brazing block (11).

4. A connecting piece of electrically conductive material according to Claim 2,
***characterised* in that** the end portion (10) of the brazing block (11) of the joint part is shaped to fit into a pipe portion (7), that a cable or thread (6), together with the joint part, are inserted into a pipe portion (7) that is being compressed, and that the compression joint is being brazed or welded.

5. Connecting piece of electrically conductive material according to Claim 2,
***characterised* in that** the front portion (8) of the brazing block (11) of the joint part is dimensioned to allow for modification of its shape according to the workpiece 5 using available pressure from the guard ring (22) together with the reached temperature, thereby accomplishing an evenly thick braze joint.

6. A connecting piece of electrically conductive material according to Claim 2,
***characterised* in that** the end portion (10) of the brazing block of the joint part is shaped for and joined with a connection pipe (28), intended to subsequently receive in its other end a cable or thread (6).

7. A connecting piece of electrically conductive material according to Claim 2,
***characterised* in that** the end portion (10) of the brazing block (11) of the joint part is shaped with a connection where one or several threaded bolt portions are secured.

8. A connecting piece of electrically conductive material according to Claim 2,
***characterised.* in that** the end portion (10) of the brazing block (11) of the joint part is directly or indirectly joined with one or several other connecting pieces (4).

9. A connecting piece of electrically conductive material according to Claim 2,
***characterised* in that** the end portion (10) of the brazing block (11) of the joint part is provided with one or several tongues which are folded and pressed around or support optional elements.

10. A connecting piece of electrically conductive material according to Claim 2,
***characterised* in that** the end portion (10) of the brazing block (11) of the joint part is provided with side wings which are folded and pressed around a cable or thread (6), whereupon the compression joint is being brazed or welded.

11. A connecting piece of electrically conductive material according to Claim 2,
***characterised* in that** the end portion (10) of the brazing block (11) of the joint part is provided with one or several mounting holes (33).

12. A connecting piece of electrically conductive material according to Claim 2,
***characterised* in that** the front portion (8) of the brazing block (11) of the joint part is common to one or several brazing blocks (11).

## Patentansprüche

1. Verfahren zum Herstellen eines Verbindungsstücks aus elektrisch leitfähigem Material, vorzugsweise eines Kabelschuhs, Halters oder einer Verbindungseinrichtung, welcher/welche mit einem anderen Objekt aus elektrisch leitfähigem Material unter Verwendung eines Lötvorgangs ohne eine verbleibende schädliche Martensitstruktur in dem Objekt unter der Lötverbindung verbunden werden soll, **dadurch gekennzeichnet, dass**
ein homogener Körper zu einem Lötblock (11) geformt wird, bestehend aus einem Vorderbereich (8), einem Mittelbereich (9) und einem Endbereich (10),
der Lötblock (11) in seinem Vorderbereich (8) durch eine Lötklemme (14) zusammengepresst wird, um ein Verbindungsteil zu bilden, wobei die Lötklemme (14) aus zwei Klemmstreifen (15), Seitenbereichen (16), einem unterliegenden Mittelbereich (19) und zwei unterliegenden Teilen (20) besteht,
die zwei unterliegenden Teile (20) und die zwei Klemmstreifen (15) in den Vorderbereich (8) des Lötblocks (11) gepresst werden, wobei die Klemmstreifen (15) in die Oberseite des Klemmblocks (11) gepresst werden und wobei die zwei Seitenbereiche (16) und der unterliegende Mittelbereich (19) außerhalb des Vorderbereichs (8) angeordnet werden, so dass während des Lötens der unterliegende Mittelbereich (19) schmelzen und die Oberfläche zwischen dem Boden des Lötblocks (11) und dem Objekt überdecken wird, wobei die Lötklemme (14) in einer Querrichtung in Bezug auf den Lötblock (11) ausgerichtet wird, und
der Mittelbereich (9) des Lötblocks (11) so geformt wird, dass eine halbkreisförmige erhabene Führungskante (12) in einer an einen Führungsring (22), der während des Lötvorgangs angebracht ist, angepassten Form in Verbindung mit dem Vorderbereich (8) ausgebildet wird, und
die Oberfläche des Vorderbereichs (8) des Lötblocks durch Strahlen, Rändeln und/oder mit Kavitäten oder einer anderen Oberflächen modifizierenden Maßnahme oberflächlich modifiziert wird,
und der Endbereich (10) des Lötblocks (11) zu einem kooperierenden Teil für eine Anbringung an ein Kabel (6), einen Gewindebolzenabschnitt oder ein Verbindungsstück (4) geformt wird, und
der Lötblock (11) alleine oder verbunden in geeigneten Konstellationen unter Verwendung zum Beispiel eines Pressens, Lötens, Nietens, Bohrens oder Schweißens mit anderen kooperierenden Teilen, wie Ringen, Rohren, Gewindebolzenteilen, Löchern, Flügeln, Zungen, Haken, oder anderen Lötblockteilen, wie auch Kabeln oder Gewinde, ein Verbindungsstück (4) bildet, zum Beispiel einen Kabelschuh, Halter oder eine Verbindungseinrichtung.

2. Verbindungsstück aus elektrisch leitfähigem Material, vorzugsweise ein Kabelschuh, ein Halter oder eine Verbindungseinrichtung, welcher/welche mit einem anderen Objekt aus elektrisch leitfähigem Material unter Verwendung eines Lötvorgangs ohne eine verbleibende schädliche Martensitstruktur in dem Objekt unter der Lötverbindung verbunden werden soll, **dadurch gekennzeichnet, dass**
das Verbindungsstück aus einem homogenen Lötblock (11) und einer Lötklemme (14) besteht, die ein Gelenkteil bildet,
wobei der Lötblock (11) aus einem Vorderbereich (8), einem Mittelbereich (9) und einem Endbereich (10) besteht, der Mittelbereich (9) des Lötblocks (11) so geformt ist, dass eine halbkreisförmige erhabene Führungskante (12) in einer an einen Führungsring (22), der während des Lötvorgangs angebracht ist, angepassten Form in Verbindung mit dem Vorderbereich (8) ausgebildet ist, und
die Lötklemme (14) aus zwei Klemmstreifen (15), Seitenbereichen (16), einem unterliegenden Mittelbereich (19) und zwei unterliegenden Teilen (20) besteht und den Vorderbereich (8) umschließt,
wobei die zwei unterliegenden Teile (20) und die zwei Klemmstreifen (15) in den Vorderbereich (8) des Lötblocks (11) gepresst werden, wobei die Klemmstreifen (15) in die Oberseite des Klemmblocks (11) gepresst werden und wobei die zwei Seitenbereiche (16) und der unterliegende Mittelbereich (19) außerhalb des Vorderbereichs (8) angeordnet sind, so dass während des Lötens der unterliegende Mittelbereich (19) schmelzen und die Oberfläche zwischen dem Boden des Lötblocks (11) und einem Objekt überdecken wird,
wobei die Oberfläche wenigstens der Oberseite des Vorderbereichs (8) des Lötblocks durch Strahlen und/oder Rändeln (24) oder eine andere Oberflächen modifizierende Maßnahme vergrößert wurde.

3. Verbindungsstück für ein elektrisch leitfähiges Material nach Anspruch 2, **dadurch gekennzeichnet, dass** die Lötklemme (14) aus einem Stück nicht lochgestanzten Blechs gebildet ist und beide überliegenden Klemmstreifen (15) der Lötklemme (14) in die Oberfläche des Vorderbereichs (8) des Lötblocks (11) gepresst werden, wohingegen die Seitenbereiche (20) der Bodenfläche der Lötklemme (14) in den Lötblock gepresst wurden, und kein Schlupf zwischen dem Lötblock und der Lötklemme vorhanden ist, und Ecken und Kurzseiten (16) der Lötklemme nicht vom Körper des Lötblocks (11) nach außen vorstehen.

4. Verbindungsstück aus elektrisch leitfähigem Material nach Anspruch 2, **dadurch gekennzeichnet, dass** der Endbereich (10) des Lötblocks (11) des Verbindungsteils so geformt ist, dass dieser in einen Rohrbereich (7) passt, dass ein Kabel oder Gewinde (6) zusammen mit dem Verbindungsteil in einen Rohrbereich (7), der zusammengepresst wird, eingesetzt ist und dass die Pressverbindung gelötet oder geschweißt wird.

5. Verbindungsstück eines elektrisch leitfähigen Materials nach Anspruch 2, **dadurch gekennzeichnet, dass** der Vorderbereich (8) des Lötblocks (11) des Verbindungsteils so dimensioniert ist, dass dieser eine Modifikation seiner Form entsprechend dem Werkstück 5 unter Verwendung eines verfügbaren Drucks von dem Führungsring (22) zusammen mit der erreichten Temperatur erlaubt, wodurch eine gleichmäßig dicke Lötverbindung herbeigeführt wird.

6. Verbindungsstück aus elektrisch leitfähigem Material nach Anspruch 2, **dadurch gekennzeichnet, dass** der Endbereich (10) des Lötblocks des Verbindungsteils für ein Verbindungsrohr (28) geformt und mit diesem verbunden ist, das dazu gedacht ist, nachfolgend in seinem äußeren Ende ein Kabel oder Gewinde (6) aufzunehmen.

7. Verbindungsstück aus elektrisch leitfähigem Material nach Anspruch 2, **dadurch gekennzeichnet, dass** der Endbereich (10) des Lötblocks (11) des Verbindungsteils mit einer Verbindung geformt ist, an welcher ein oder mehrere Gewindebolzenbereiche befestigt sind.

8. Verbindungsstück aus elektrisch leitfähigem Material nach Anspruch 2, **dadurch gekennzeichnet, dass** der Endbereich (10) des Lötblocks (11) des Verbindungsteils direkt oder indirekt mit ein oder mehreren anderen Verbindungsstücken (4) verbunden ist.

9. Verbindungsstück aus elektrisch leitfähigem Material nach Anspruch 2, **dadurch gekennzeichnet, dass** der Endbereich (10) des Lötblocks (11) des Verbindungsteils mit ein oder mehreren Zungen versehen ist, die um optionale Elemente herum gebogen und gedrückt sind oder diese tragen.

10. Verbindungsstück aus elektrisch leitfähigem Material nach Anspruch 2, **dadurch gekennzeichnet, dass** der Endbereich (10) des Lötblocks (11) des Verbindungsteils mit Seitenflügeln versehen ist, welche um ein Kabel oder Gewinde (6) herum gebogen und gepresst sind, woraufhin die Pressverbindung gelötet oder geschweißt wird.

11. Verbindungsstück aus elektrisch leitfähigem Material nach Anspruch 2, **dadurch gekennzeichnet, dass** der Endbereich (10) des Lötblocks (11) des Verbindungsteils mit ein oder mehreren Montagelöchern (33) versehen ist.

12. Verbindungsstück aus elektrisch leitfähigem Material nach Anspruch 2, **dadurch gekennzeichnet, dass** der Vorderbereich (8) des Lötblocks (11) des Verbindungsteils gemeinsam für ein oder mehrere Lötblöcke (11) vorliegt.

## Revendications

1. Procédé de fabrication d'une pièce de connexion de matériau électriquement conducteur, de préférence une cosse de câble, un support ou un dispositif de connexion, qui doit être joint avec un autre objet de matériau électriquement conducteur à l'aide d'un processus de brasage fort sans structure martensitique résiduelle préjudiciable dans l'objet sous le joint de brasure forte, **caractérisé en ce que**
un corps homogène est formé en un bloc de brasage fort (11) constitué d'une portion avant (8), d'une portion milieu (9) et d'une portion d'extrémité (10),
le bloc de brasage fort (11), dans sa portion avant (8), est comprimé par une pince à braser fortement (14) afin de former une partie de joint, la pince à braser fortement (14) étant constituée de deux plaquettes de serrage (15), de portions latérales (16), d'une portion milieu sous-jacente (19) et de deux parties sous-jacentes (20),
les deux parties sous-jacentes (20) et les deux plaquettes de serrage (15) sont pressées dans la portion avant (8) du bloc de brasage fort (11), où les plaquettes de serrage (15) sont pressées dans le côté supérieur du bloc de brasage fort (11), et où les deux portions latérales (16) et la portion milieu sous-jacente (19) sont situées à l'extérieur de la portion avant (8), de sorte que, au moment du brasage fort, la portion milieu sous-jacente (19) va fondre et recouvrir la surface entre le fond du bloc de brasage fort (11) et l'objet, la pince à braser (14) étant orientée dans une direction transversale par rapport au bloc de brasage fort (11), et
la portion milieu (9) du bloc de brasage fort (11) étant formée de sorte qu'un bord de guidage surélevé semi-circulaire (12) de forme adaptée à un anneau de garde (22) fixé pendant le processus de brasage fort est formé en connexion avec la portion avant (8), et
la surface de la portion avant (8) du bloc de brasage fort étant modifiée superficiellement par décapage, moletage et/ou par cavités, ou toute autre mesure de modification de surface,
et la portion d'extrémité (10) du bloc de brasage fort (11) étant formée à une partie de coopération pour une fixation à un câble (6), une portion de boulon filetée ou une pièce de connexion (4), et
le bloc de brasage fort (11) seul ou joint en constellations appropriées, utilisant par exemple, le pressage, le brasage fort, le rivetage, le perçage ou le soudage avec d'autres parties de coopération telles que des anneaux, des tuyaux, des parties de boulon filetées, des orifices, des ailettes, des languettes, des crochets ou autres parties du bloc de brasage fort, également des câbles ou des filetages, forment une pièce de connexion (4), par exemple une cosse de câble, un support ou un dispositif de connexion.

2. Pièce de connexion de matériau électriquement conducteur, de préférence une cosse de câble, un support ou un dispositif de connexion, qui doit être joint avec un autre objet de matériau électriquement conducteur à l'aide d'un processus de brasage fort sans structure martensitique résiduelle préjudiciable dans cet autre objet,
**caractérisée en ce que**
la pièce de connexion consiste en un bloc de brasage fort homogène (11) et une pince à braser (14) formant une partie de joint,
le bloc de brasage fort (11) constituée d'une portion avant (8), d'une portion milieu (9) et d'une portion d'extrémité (10), la portion milieu (9) étant formée de sorte qu'un bord de guidage surélevé semi-circulaire (12) de forme adaptée à un anneau de garde (22) fixé pendant le processus de brasage fort est formé en connexion avec la portion avant (8), et
la pince à braser (14) est constituée de deux plaquettes de serrage (15), de portions latérales (16), d'une portion milieu sous-jacente (19) et de deux parties sous-jacentes (20), et englobe la portion avant (8),
les deux parties sous-jacentes (20) et les deux plaquettes de serrage (15) étant pressées dans la portion avant (8) du bloc de brasage fort (11), dans lequel les plaquettes de serrage (15) sont pressées dans le côté supérieur du bloc de brasage fort (11), et dans lequel les deux portions latérales (16) et la portion milieu sous-jacente (19) sont situées à l'extérieur de la portion avant (8), de sorte que, au moment du brasage fort, la portion milieu sous-jacente (19) va fondre et recouvrir la surface entre le fond du bloc de brasage fort (11) et un objet,
au moins le côté supérieur de la partie avant (8) du bloc de brasage fort (11) ayant eu sa surface agrandie par décapage et/ou moletage (24) ou autre mesure de modification de surface.

3. Pièce de connexion de matériau électriquement conducteur selon la revendication 2, **caractérisée en ce que** la pince à braser (14) est formée à partir d'une pièce de feuille métallique qui n'a pas été perforée à l'emporte-pièce, et les deux plaquettes de serrage sus-jacentes (15) de la pince à braser (14) sont pressées dans la surface supérieure de la partie avant (9) du bloc de brasage fort (11) tandis que les portions latérales (20) de la surface inférieure de la pince à braser (14) ont été pressées dans le bloc de brasage fort, et il n'existe aucun flux entre le bloc de brasage fort et la pince à braser, et des coins et des petits côtés (16) de la pince à braser ne dépassant pas à l'extérieur du corps du bloc de brasage fort (11).

4. Pièce de connexion de matériau électriquement conducteur selon la revendication 2, **caractérisée en ce que** la portion d'extrémité (10) du bloc de brasage fort (11) de la partie de joint est formée afin d'être ajustée dans une portion de tuyau (7), **en ce qu'**un câble ou filetage (6), conjointement avec la partie de joint, sont insérés dans une portion de tuyau (7) qui est comprimée, et **en ce que** le joint de compression est brasé fortement ou soudé.

5. Pièce de connexion de matériau électriquement conducteur selon la revendication 2, **caractérisée en ce que** la portion avant (8) du bloc de brasage fort (11) de la partie de joint est dimensionnée afin de tenir compte de la modification de sa forme selon la pièce de travail 5 à l'aide de la pression disponible provenant de l'anneau de garde (22) conjointement avec la température atteinte, accomplissant ainsi un joint de brasure d'épaisseur régulière.

6. Pièce de connexion de matériau électriquement conducteur selon la revendication 2, **caractérisée en ce que** la portion d'extrémité (10) du bloc de brasage fort de la partie de joint est formée pour et jointe à un tuyau de connexion (28), destiné à recevoir ultérieurement dans son autre extrémité un câble ou un filetage (6).

7. Pièce de connexion de matériau électriquement conducteur selon la revendication 2, **caractérisée en ce que** la portion d'extrémité (10) du bloc de brasage fort (11) de la partie de joint est formée avec une connexion où une ou plusieurs portions de boulon filetées sont arrimées.

8. Pièce de connexion de matériau électriquement conducteur selon la revendication 2, **caractérisée en ce que** la portion d'extrémité (10) du bloc de brasage fort (11) de la partie de joint est directement ou indirectement jointe à une ou plusieurs autres pièces de connexion (4).

9. Pièce de connexion de matériau électriquement conducteur selon la revendication 2, **caractérisée en ce que** la portion d'extrémité (10) du bloc de brasage fort (11) de la partie de joint est pourvue d'une ou plusieurs languettes qui sont pliées et pressées autour d'éléments facultatifs ou qui les supportent.

10. Pièce de connexion de matériau électriquement conducteur selon la revendication 2, **caractérisée en ce que** la portion d'extrémité (10) du bloc de brasage fort (11) de la partie de joint est pourvue d'ailettes latérales qui sont pliées et pressées autour d'un câble ou d'un filetage (6), sur lequel le joint de compression est brasé fortement ou soudé.

11. Pièce de connexion de matériau électriquement conducteur selon la revendication 2, **caractérisée en ce que** la portion d'extrémité (10) du bloc de brasage fort (11) de la partie de joint est pourvue d'un ou plusieurs orifices de montage (33).

12. Pièce de connexion de matériau électriquement conducteur selon la revendication 2, **caractérisée en ce que** la portion avant (8) du bloc de brasage fort (11) de la partie de joint est commune à un ou plusieurs blocs de brasage fort (11).
